(19)

Europäisches
Patentamt

European
Patent Office

Office européen
des brevets

(11) **EP 2 713 542 B1**

(12) **EUROPEAN PATENT SPECIFICATION**

(45) Date of publication and mention
of the grant of the patent:
**30.11.2016 Bulletin 2016/48**

(51) Int Cl.:
***H04L 5/00*** *(2006.01)*

(21) Application number: **12306163.2**

(22) Date of filing: **26.09.2012**

(54) **Method and transmitter apparatus for composing a transmit signal and method and receiver apparatus for channel estimation**

Verfahren und Übertragungsvorrichtung zum Zusammenstellen eines Übertragungssignals und Verfahren und Empfängervorrichtung für Kanalschätzung

Procédé et appareil de transmission pour composer un signal de transmission et procédé et appareil récepteur d'estimation de canal

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.04.2014 Bulletin 2014/14**

(73) Proprietor: **ALCATEL LUCENT**
**92100 Boulogne-Billancourt (FR)**

(72) Inventors:
• **Schaich, Frank**
**70469 Feuerbach (DE)**

• **Wild, Thorsten**
**70435 Stuttgart (DE)**

(74) Representative: **Kleinbub, Oliver et al**
**Alcatel-Lucent Deutschland AG**
**Intellectual Property & Standards**
**Lorenzstrasse 10**
**70435 Stuttgart (DE)**

(56) References cited:
**US-A1- 2010 103 949     US-A1- 2012 183 103**

**Description**

**FIELD OF THE INVENTION**

Embodiments of the invention relate to communications and, more particularly but not exclusively, to channel estimation in a radio communication system.

**BACKGROUND**

When data signals are transmitted from a transmitter apparatus via a transmission channel to a receiver apparatus, several effects such as scattering, fading and/or power decay usually have an impact on the transmitted signal at a location of the receiver apparatus and therefore, modified data signals are received by the receiver apparatus. For being able to recover the data signals by the receiver apparatus, reference signals are transmitted additionally from the transmitter apparatus via the transmission channel to the receiver apparatus. Transmit power level and signal structure of the reference signals are standardized and are therefore well-known to the receiver apparatus for determining an estimation of the transmission channel based on power level and signal structure of the received reference signals and based on the transmit power level and the signal structure of the reference signals as transmitted by the transmitter apparatus. The estimation of the transmission channel is used for estimating and recovering the original data signals from the received data signals, which have been modified during passing the transmission channel.

In case of applying OFDM transmission (OFDM = Orthogonal Frequency Division Multiplexing), an estimate of the transmission channel for each OFDM subcarrier, as well as for several time-neighbored OFDM symbols, is required. Therefore, several reference signals are distributed and transmitted by a predefined selection of radio resource elements of a two dimensional frequency time grid of radio resource elements and wherein a frequency axis is split into a group of OFDM subcarriers and wherein the time axis is split into a group of time slots and wherein each time slot preferably transmits such as in LTE (LTE = Long Term Evolution) an LTE cyclic prefix and an OFDM symbol. For limiting a number of reference signals, the channel estimation usually includes a frequency interpolation method for those OFDM subcarriers, on which no reference signals are transmitted, as well as a time interpolation method for those time slots of OFDM symbols, on which no reference signals are transmitted.

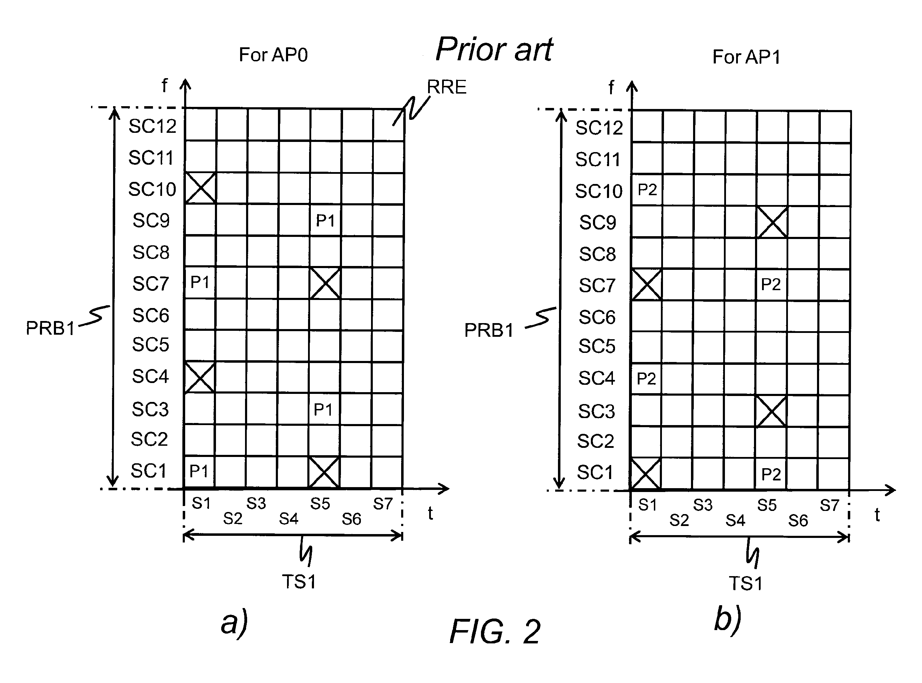

In case of applying a transmit antenna system with two or more antenna elements at the transmitter apparatus and preferably also a receive antenna system with two or more antenna elements at the receiver apparatus a number of transmission links increases from a single transmission link to a set of transmission links, which build up the transmission channel. The set of transmission links contains transmission links for each possible link between one of the antenna elements of the transmit antenna system and one of the antenna elements of the receive antenna system. For obtaining channel estimations for each transmission link of the set of transmission links, reference signals have to be transmitted from each antenna element of the transmit antenna system or at least from each subset of antenna elements of the transmit antenna system. For a distinction between reference signals, which have been transmitted from different antenna elements, first reference signals of a first antenna element are transmitted on a first predefined group of radio resource elements of the two dimensional frequency time grid of radio resource elements and second reference signals of a second antenna element are transmitted on a second predefined group of radio resource elements of the two dimensional frequency time grid of radio resource elements (see also Figure 2). Alternatively for a distinction between reference signals, which have been transmitted from same antenna elements, the first reference signals may be transmitted with a first spreading code and the second reference signals may be transmitted with a second spreading code on a same predefined group of radio resource elements of the two dimensional frequency time grid of radio resource elements. By using such an alternative, the first reference signals are superimposed to the second reference signals.

A relation between a received signal vector $\overline{y}$ and a transmitted signal vector $\overline{s}$ can be written by following general equation:

$$\overline{y} = \begin{pmatrix} y_1 \\ \vdots \\ y_{N_R} \end{pmatrix} = \begin{pmatrix} h_{11} & \cdots & h_{1N_S} \\ \vdots & \ddots & \vdots \\ h_{N_R 1} & \cdots & h_{N_R N_S} \end{pmatrix} \cdot \begin{pmatrix} s_1 \\ \vdots \\ s_{N_S} \end{pmatrix} + \begin{pmatrix} n_1 \\ \vdots \\ n_{N_R} \end{pmatrix} = \overline{h} \cdot \overline{s} + \overline{n} \qquad (1)$$

with $\overline{n}$ as a noise vector, $\overline{h}$ as a channel matrix, $N_R$ as a number or antenna elements at a receiver such as a mobile station and $N_S$ as a number of antenna elements at a transmitter such as a base station.

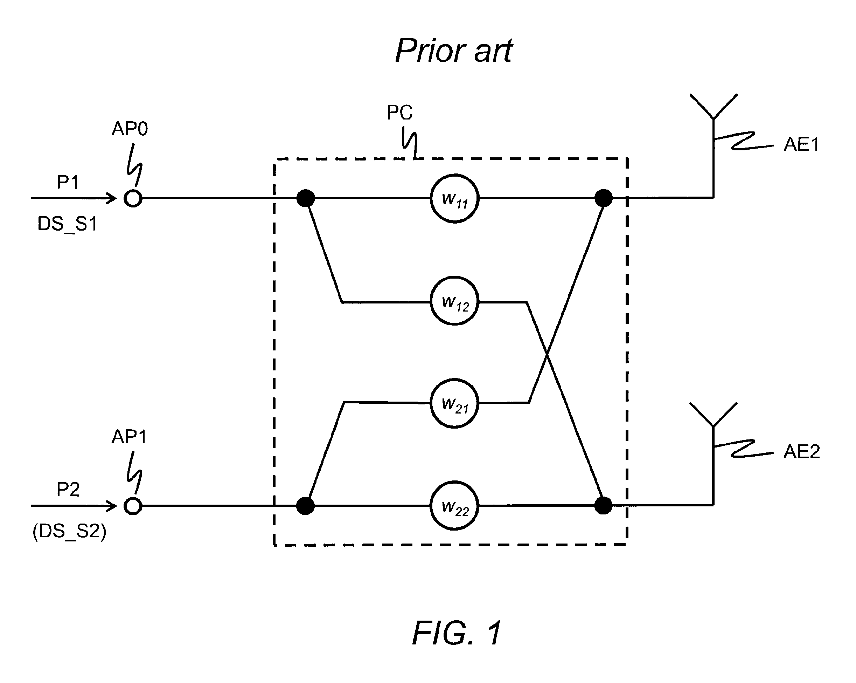

When the mobile station receives downlink data signals such as OFDM data symbols from the base station, the mobile station usually performs channel estimation, equalization and multi-antenna receive combining of the OFDM data symbols. Afterwards, decoding is done, allowing performing a cyclic redundancy check (CRC) on the decoded bits. Thereby, it is decided, whether the block of coded bits, and thus the OFDM data symbols, has been received correctly or not. When the code block has been received correctly, PHY layer processing (PHY = physical) is done. When the code block has not been received correctly, a retransmission may be requested from the base station. In order to perform equalization and receive combining of the OFDM data symbols, the mobile station has to estimate channel coefficients $h_{ij}$ of the channel matrix $\overline{h}$. Therefore, so-called single-antenna-element-wise reference signals may be transmitted in an alternating way from each antenna element of the transmit antenna system of the base station (see also Figure 2). This means that the single-antenna-element-wise reference signals may be transmitted successively from each antenna element and no further reference signal or no OFDM data signal is transmitted from a further one of the antenna elements on a same radio resource element. Figure 1 shows schematically at a transmitter end a processing of reference signals P1, P2 between antenna ports AP0, AP1 and antenna elements AE1, AE2. The antenna ports AP0, AP1 are logical ports and may be identical to physical ports of a transmission chain at the transmitter.

First reference signals P1 being provided to a first antenna port AP0 are weighted in parallel by a precoder PC with a first complex weight factor $W_{11}$ and a second complex weight factor $W_{12}$. Second reference signals P2 being provided to a second antenna port AP1 are weighted in parallel by the precoder PC with a third complex weight factor $W_{21}$ and a fourth complex weight factor $W_{22}$.

The signal vector $\overline{s}$ of equation (1) may be described by following general equation:

$$\overline{s} = \begin{pmatrix} W_{11} & \cdots & W_{1N_P} \\ \vdots & \ddots & \vdots \\ W_{N_S 1} & \cdots & W_{N_S N_P} \end{pmatrix} \cdot \begin{pmatrix} s_{10} \\ \vdots \\ s_{N_S 0} \end{pmatrix} \qquad (2)$$

with $W_{ij}$ as complex weigth factors and $S_{i0}$ as elements of an unweighted signal vector $\overline{s}_0$.

In case of the single-antenna-element-wise reference signals P1, P2, the second complex weight factor $W_{12}$ and the third complex weight factor $W_{21}$ are set to zero and the first complex weight factor $W_{11}$ and the fourth complex weight factor $W_{22}$ are set to 1. Thereby, the first reference signals P1 are only transmitted via a first antenna element AE1 and the second reference signals P2 are only transmitted via a second antenna element AE2. In case of pre-coded, directed reference signals P1, P2, usually no one of the complex weight factors $W_{11}$, $W_{12}$, $W_{21}$ and $W_{22}$ is set to zero. Thereby, a directed radiation of the first and the second reference signals P1, P2 is achieved by transmitting each of the first and the second reference signals P1, P2 via both antenna elements AE1, AE2.

Data signals can be transmitted via the antenna elements AE1, AE2 to a receiving apparatus by using one data stream or two independent data streams. When a single data stream is applied with respect to the receiving apparatus, data signals DS_S1 can be applied to one of the antenna ports AP0, AP1 (e.g. to the first antenna port AP0 as shown in Figure 1). When two data streams are applied with respect to the receiving apparatus, the data signals DS_S1 can be applied to one of the antenna ports AP0, AP1 (e.g. to the first antenna port AP0 as shown in Figure 1) and further data signals DS_S2 can be applied to the other one of the antenna ports AP0, AP1 (e.g. to the second antenna port AP1 as shown in Figure 1)

An allocation of the first reference signals P1 and the second reference signals P2 to radio resource elements is shown in Figure 2. With respect to Figure 2 a) a first frequency time grid with predefined positions for first reference signals P1 is shown for the first antenna port AP1 of Figure 1 and with respect to Figure 2 b) a second frequency time grid with further predefined positions for second reference signals P2 is shown for the second antenna port AP2 of Figure 1. Such predefined positions for the first and the second reference signals P1, P2 are for example applied for the downlink direction in LTE.

The first and the second frequency time grid are shown for a single LTE PRB PRB1 (PRB = Physical Resource Block), which contains 12 adjacent OFDM subcarriers SC1 to SC12 with a subcarrier spacing of 15 kHz. The first and the second frequency time grid are further shown for a single LTE time slot TS1, which contains seven sequenced OFDM data symbol positions S1 to S7 in a time range of 0.5 ms. Between two successive OFDM data symbols usually a cyclic prefix is applied, which is not shown in Figure 2 for simplification.

A single OFDM subcarrier and a single OFDM data symbol represent a single radio resource element RRE. With respect to the first predefined frequency time grid, four first reference signals P1 are allocated to subcarrier-symbol positions SC1/S1, SC7/S1, SC3/S5 and SC9/S5 by applying a subcarrier offset of 6 subcarriers and a symbol offset of 4 OFDM data symbols between the four first reference signals P1. With respect to the second predefined frequency time grid, four second reference signals P2 are allocated to further subcarrier-symbol positions SC4/S1, SC10/S1, SC1/S5 and SC7/S5 by applying also a subcarrier offset of 6 subcarriers and a symbol offset of 4 OFDM data symbols between the four second reference signals P2. For avoiding interference between the four first reference signals P1 being provided to the first antenna port AP0 and further signals, no such further signals are allocated to radio resource elements at the subcarrier-symbol positions SC1/S1, SC7/S1, SC3/S5 and SC9/S5 for a transmission via the second antenna port AP1. In an equivalent way for avoiding interference between the four second reference signals P2 being provided to the second antenna port AP1 and even further signals, no such even further signals are allocated to radio resource elements at the further subcarrier-symbol positions SC4/S1, SC10/S1, SC1/S5 and SC7/S5 for a transmission via the first antenna port AP0. The blanked radio resources are indicated in Figure 1a) and Figure 1b) by crosses.

In the uplink direction in LTE, all reference signals are transmitted at a same ODFM data symbol position such as the OFDM data symbol position S4 and no OFDM data symbols are transmitted for this OFDM data symbol position. In such a case, no inter-symbol interference between OFDM data symbols and reference signals occurs according to the frequency direction of the corresponding frequency time grid.

US 2012/0183103 A1 describes a demodulation method and demodulator in an OFDM MIMO communication system (MIMO = Multiple Input Multiple Output). For a signal of $0^{th}$ path, a reference signal R0 used for channel estimation is distributed in gap at a plurality of different OFDM sub-carriers. Marks in a time frequency grid of the $0^{th}$ path with cross-lines corresponds to time domain resources bearing a reference signal R1 and an antenna of the $0^{th}$ path does not transmit any signal in these time domain resources. In a same way, for a signal of $1^{st}$ path, the reference signal R1 used for channel estimation is distributed in gap at a plurality of different OFDM sub-carriers. Marks in a time frequency grid of the $1^{st}$ path with cross-lines corresponds to time domain resources bearing the reference signal R0 and an antenna of the $1^{st}$ path does not transmit any signal in these time domain resources.

US 2010/0103949 A1 discloses a method of allocating reference signals in a MIMO system. The method includes allocating a first reference signal, a second reference signal and a third reference signal in a first OFDM symbol so that the first reference signal, the second reference signal and the third reference signal do not overlap with each other and allocating the first reference signal, the second reference signal and a fourth reference signal in a second OFDM symbol so that the first reference signal, the second reference signal and the fourth reference signal do not overlap with each other. The first reference signal and the second reference signal are allocated in regular intervals in a single OFDM symbol.

## SUMMARY

When a number of antenna elements at the transmit antenna system is further increasing, signalling overhead for transmitting the reference signals should be kept as low as possible. Thus, one object of the embodiments of the invention is to limit a number of radio resources, which are required for transmitting the reference signals.

The present invention attains the above described object by the subject-matter of the independent claims. Advantageous embodiments are subject to the dependent claims.

In case of OFDM as applied in 3GPP LTE (3GPP = Third Generation Partnership Program) for example, the data signal may be for example an OFDM symbol, the first radio resource element may contain for example in a frequency range a single OFDM subcarrier and a time range of the first radio resource element may be split into a cyclic prefix and a useful symbol time.

By superimposing first fractions of the at least two reference signals with the data signal in the first radio resource element and allocating the at least second fractions of the at least two reference signals to the at least second radio resource element a consumption of radio resources for transmitting reference signals via antenna systems with two or more antenna elements can be limited or reduced, without obtaining any interference between the at least two reference signals.

Further advantageous features of the embodiments of the invention are defined and are described in the following detailed description.

## BRIEF DESCRIPTION OF THE FIGURES

The embodiments of the invention will become apparent in the following detailed description and will be illustrated by accompanying figures given by way of non-limiting illustrations.

Figure 1 shows schematically a block diagram at a transmitter end for a processing of reference signals between two antenna ports and two antenna elements according to the prior art.
Figure 2 shows schematically two frequency time grids for an allocation of reference signals and for two antenna ports according to the prior art.
Figure 3 shows schematically a block diagram of a base station and a mobile station according to an embodiment of the invention.
Figure 4 shows a flow diagram of a method according to the embodiment of the invention.
Figure 5 shows schematically two frequency time grids for an allocation of reference signals and for two antenna ports according to the embodiment of the invention.

Figure 6 shows schematically for an extract of Figure 5 a superimposing of two reference signals and a data signal according to the embodiment of the invention.

Figure 7 shows schematically for an extract of a further frequency time grid a superimposing of four reference signals and three data signals according to a further embodiment of the invention.

Figure 8 shows schematically for an extract of an even further frequency time grid a superimposing of two reference signals and a data signal according to an even further embodiment of the invention.

Figure 9 shows schematically for an extract of a further frequency time grid a superimposing of four reference signals and four data signals according to a further embodiment of the invention.

Figure 10 shows a block diagram of a network node containing a transmitter apparatus according to the embodiments of the invention.

Figure 11 shows a block diagram of a further network node containing a receiver apparatus according to the embodiments of the invention.

## DESCRIPTION OF THE EMBODIMENTS

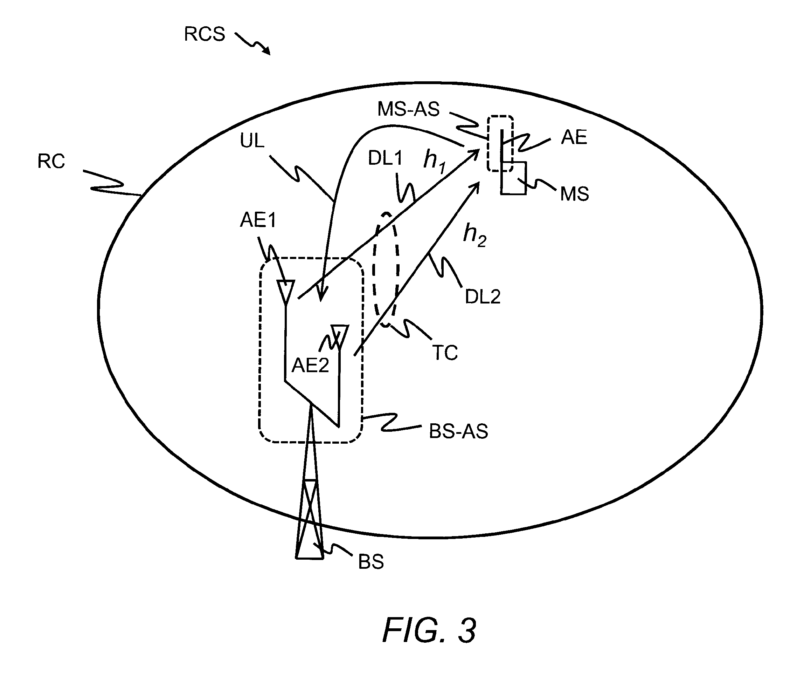

Figure 3 shows exemplarily a radio communication system RCS, which contains a base station BS. The base station BS contains or is connected to an antenna system BS-AS. Radio frequency signals, which are transmitted from the antenna system BS-AS, provide coverage for a radio cell RC. Further base stations and further radio cells of the radio communication system RCS and a core network, which is connected to base station BS are not shown for simplification.

The radio communication system RCS may be for example a 3GPP LTE radio communication system using OFDM (OFDM = Orthogonal Frequency Division Multiplexing). In further alternatives, the radio communication system RCS may be for example a WiMAX radio communication system (WiMAX = Worldwide Interoperability for Microwave Access) based for example on the IEEE 802.16d standard (IEEE = Institute of Electrical and Electronics Engineers), or a WLAN (WLAN) based for example on the IEEE 802.11g standard.

The term "base station" may be considered synonymous to and/or referred to as a base transceiver station, base station, Node B, enhanced Node B, access point etc. and may describe equipment that provides connectivity via a radio link between the radio communication system RCS and one or more mobile stations. The term "radio cell" is considered synonymous to and/or is referred to as radio cell, cell, radio sector, sector etc.

A mobile station MS is located within the radio cell RC and contains an antenna system MS-AS. The term "mobile station" may be considered synonymous to, and may hereafter be occasionally referred to, as a mobile unit, mobile station, mobile user, access terminal, user equipment, subscriber, user, remote station etc. The mobile station MS may be for example cellular telephones, portable computers, pocket computers, hand-held computers, personal digital assistants, USB flash drives with a radio interface or car-mounted mobile devices.

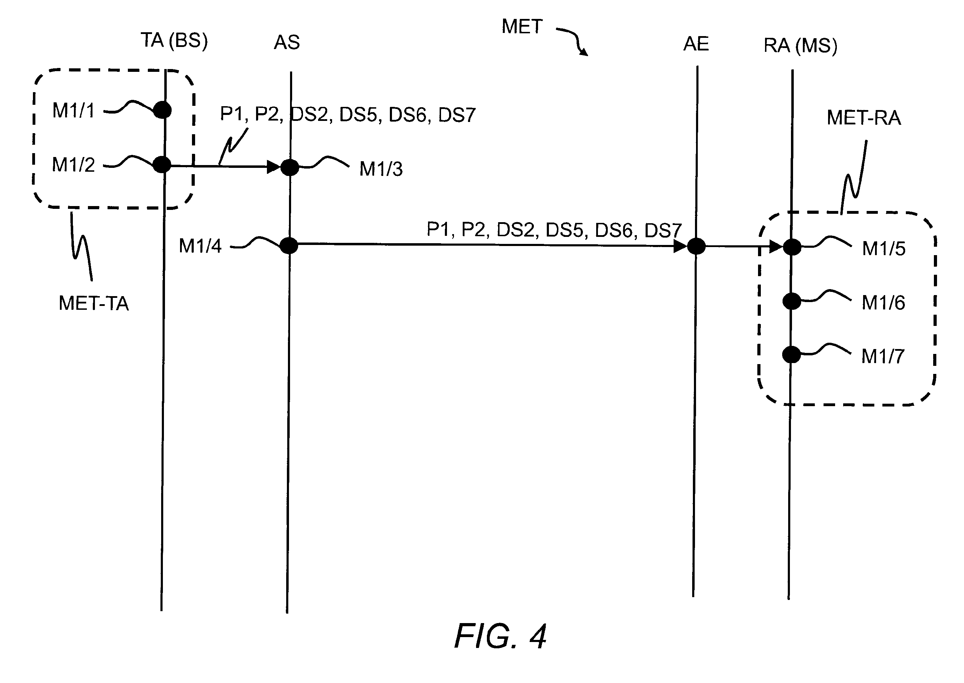

Exemplarily, the antenna system BS-AS of the base station BS contains two antenna elements AE1, AE2 and the antenna system MS-AS of the mobile station MS contains a single antenna element AE (see Figure 4). Alternatively, the antenna system BS-AS of the base station BS may contain four or more antenna elements and/or the antenna system MS-AS of the mobile station MS may contain two or more antenna elements.

In particular, the base station BS may communicate downstream with the mobile station MS via a first radio channel DL1 from a first antenna element AE1 of the antenna system BS-AS to the antenna element AE of the antenna system MS-AS according to a first channel coefficient $h_1$ and via a second radio channel DL2 from a second antenna element AE2 of the antenna system BS-AS to the antenna element AE of the antenna system MS-AS according to a second channel coefficient $h_2$. The first radio channel DL1 and the second radio channel DL2 result in an overall transmission channel TC between the the antenna system BS-AS and the antenna system MS-AS.

The base station BS may further communicate upstream with mobile station MS via a third radio channel UL from the antenna system MS-AS to the antenna system BS-AS.

For a transmission of reference signals from the base station BS to the mobile station MS, the base station may compose a transmit signal, which contains in a first fraction of a first radio resource element a first fraction of a first reference signal superimposed with a data signal, in a first fraction of at least a second radio resource element at least a second fraction of the first reference signal, in at least a second fraction of the first radio resource element a first fraction of at least a second reference signal superimposed with the data signal and in at least a second fraction of the at least second radio resource element at least a second fraction of the at least second reference signal.

Preferably, the first and the at least second fraction of the first radio resource element are non-overlapping fractions of the first radio resource element and the first and the at least second fraction of the at least second radio resource element are non-overlapping fractions of the at least second radio resource element.

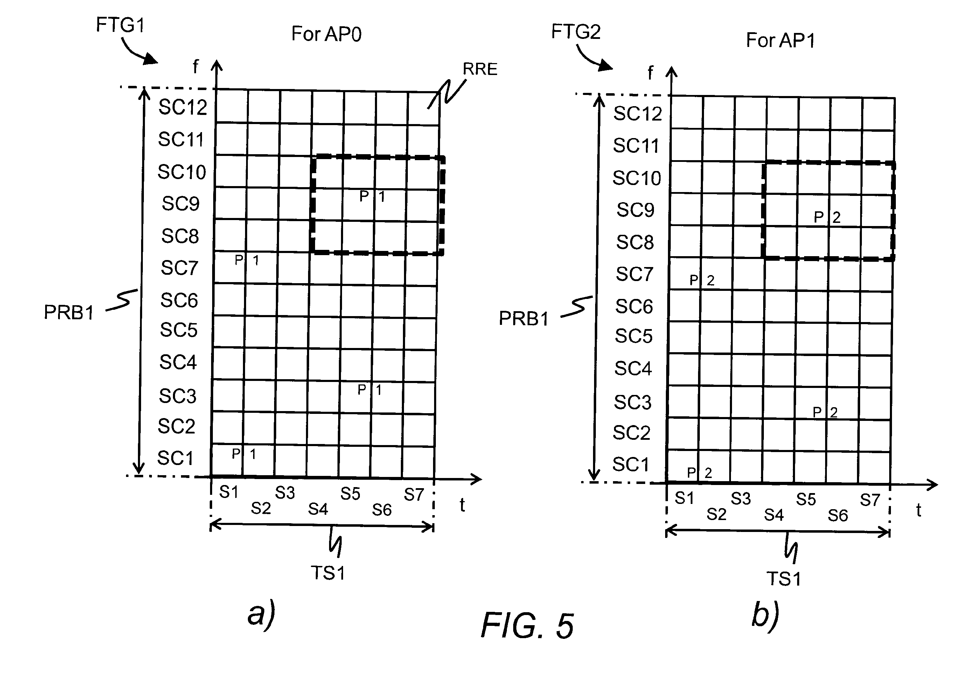

According to further alternatives three or more reference signals may be allocated to non-overlapping fractions of the first and the at least second radio resource element and may be superimposed with the data signal. In case of spatial MIMO layers (MIMO = multiple input multiple output) for LTE or in case of multiple code layers like in UMTS (UMTS = Universal Mobile Telecommunication Systems), according to the embodiments of the invention used in the sense of MC-CDMA (MC-CDMA = Multi-Carrier Code Division Multiple Access), several data signals may be allocated to the first radio resource element instead of a single data signal. The allocation and superimposing is explained in more detail with respect to Figures 5 to 8.

The term "reference signals" is considered synonymous to and/or is referred to as beacons, pilot signals, pilots, training symbols etc. The reference signals may be for example in case of an application of the embodiments of the invention in the downlink so-called cell-specific downlink reference signals, so-called UE-specific reference signals or so-called MBSFN reference signals (MBSFN = Multicast/Broadcast over Single Frequency Network). The cell-specific downlink reference signals may be transmitted in every downlink subframe, may span an entire downlink cell bandwidth and can be used for channel estimation for coherent demodulation of any downlink transmission except when so-called non-codebook based beam-forming is used. The UE-specific reference signals may be specifically intended for channel estimation for coherent demodulation of DL-SCH transmissions (DL-SCH = Downlink Shared Channel) in case of LTE for which non-codebook based beam-forming has been applied and may be only transmitted within a resource block assigned for a DL-SCH transmission to a specific mobile station. The MBSFN reference signals may be used for channel estimation for coherent demodulation of signals being transmitted by means of MBSFN in which synchronous multi-cell multicast/broadcast transmissions appear as a transmission from a single transmission point over a time-dispersive channel.

The base station BS transmits the data signal, the first reference signal and the at least second reference signal via the antenna system BS-AS to the mobile station MS. The mobile station MS estimates the transmission channel TC from the base station BS to the mobile station MS for a transmission of the data signal based on the superimposed first and the superimposed at least second reference signal. The estimation of the transmission channel is explained in more detail with respect to Figure 4.

The processing at the base station BS and at the mobile station MS may be performed in an equal way for the opposite direction, when the mobile station MS may transmit reference signals in an uplink direction to the base station BS. According to further alternatives, a same processing may be applied for a transmission of reference signals from a first base station to a second base station, from a first mobile station to a second mobile station, from a base station to a relay station, from a relay station to a mobile station, from a mobile station to a relay station or from a relay station to a base station.

Referring to Figure 4 a flow diagram of a method MET in accordance to a preferred embodiment of the invention is shown. The number of the steps for performing the method MET is not critical, and as can be understood by those skilled in the art, that the number of the steps and the sequence of the steps may vary without departing from the scope of the embodiments of the invention as defined in the appended claims, e.g. some of the steps may be performed simultaneously, some of the steps may be performed in an inverse sequence.

Steps M1/1 and M1/2 of the overall method MET, which are performed by a transmitting apparatus TA are part of a method MET-TA for transmitting reference signals in the radio communication system RCS and steps M1/6 to M1/8 of the overall method MET, which are performed by a receiver apparatus RA are part of a further method MET-RA for channel estimation in the radio communication system RCS. The transmitting apparatus TA may be for example part of the base station BS and the receiver apparatus RA may be for example part of the mobile station MS as shown in Figure 3.

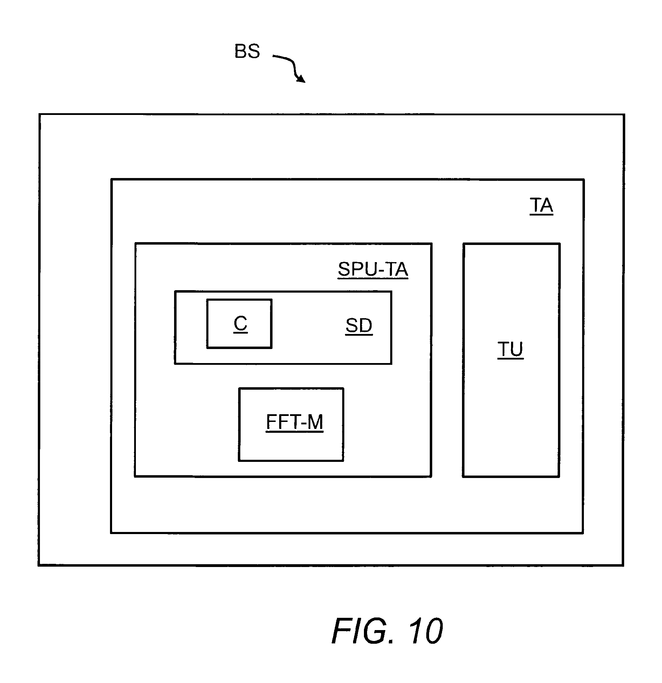

In a first step M1/1, a compose C (see Figure 10) may compose a transmit signal by executing a radio resource mapping and an antenna mapping for the data signals and the reference signals in a following way, which is explained at first with respect to Figure 5. The composer C may be for example part of a scheduler SD of a signal processing unit SPU-TA (see Figure 10) of the transmitter apparatus TA.

Figure 5a) shows exemplarily a first frequency time grid FTG1 to be applied for a first antenna port AP0 such as shown in Figure 1 and Figure 5b) shows exemplarily a second frequency time grid FTG2 to be applied for a second antenna port AP1 such as shown in Figure 1. Same reference numerals with respect to Figure 1, Figure 2 and Figure 5 describe same technical features. The first and the second frequency time grids FTG1, FTG2 are shown exemplarily for a PRB PRB1 such as defined by LTE and for a time range of a single LTE time slot TS1, which contains seven sequenced OFDM symbols S1 to S7 in the time range of 0.5 ms (similar to the frequency time grids shown in Figure 2). Instead of LTE OFDM data symbols also other symbols of any other multicarrier system with or without OFDM symbols may be applied.

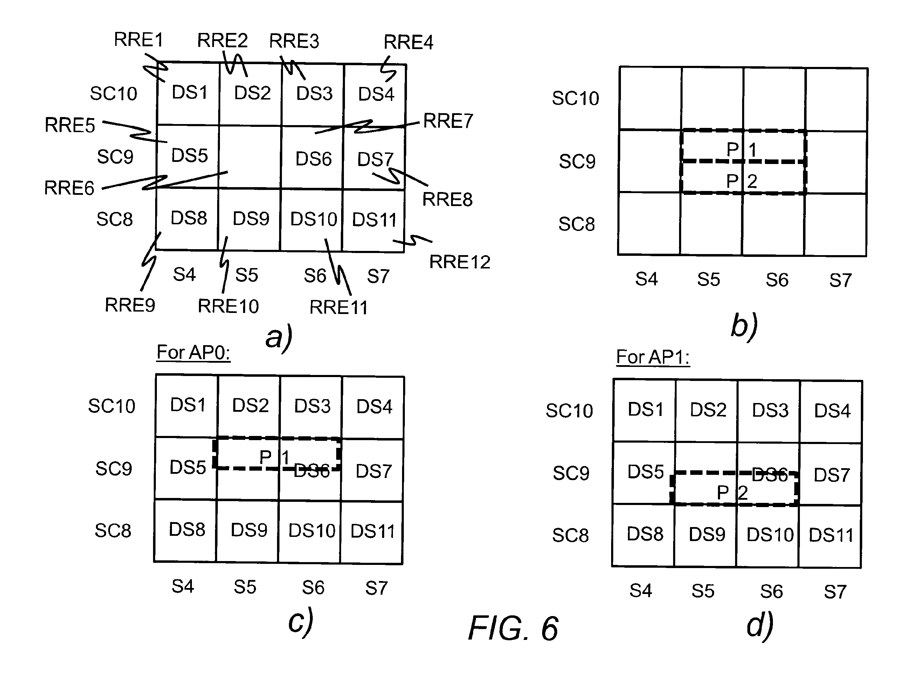

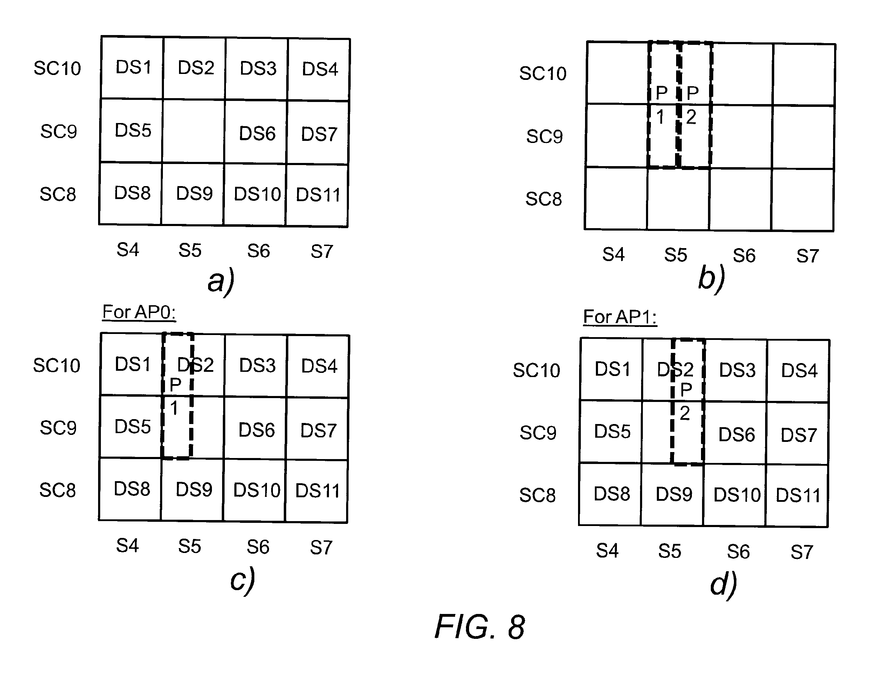

In a first sub-step, an FFT modul FFT-M (see Figure 10) of the signal processing unit SPU-TA may perform an IFFT (IFFT = Inverse Fast Fourier Transform) on predefined reference signals such as predefined OFDM reference signals with a complex-valued training sequence, mapped to particular time-frequency positions in order to generate a time domain output samples. Reference symbols with different time-frequency grid dimensioning than the data symbols are created according to various embodiments of the invention. A so-called 10-MHz LTE uses for example a 1024-IFFT within a 10 MHz frequency bandwidth generating 1024 time domain output samples (before cyclic prefix addition). While the 1024-IFFT size is used for data symbols, the reference signals are generated by a different size IFFT: For example in case of LTE, a so-called 2048 IFFT, with 2048 total subcarriers, where 1200 of them are used (being different to zero) providing an output of 2048 samples, within the 10 MHz frequency bandwidth may be applied. This means, a time length of a reference symbol with respect to reference symbols of the present art may be extended by the IFFT for example to twice a time length of an OFDM data symbol (see Figure 6). Thereby, an OFDM subcarrier spacing for a transmission of the reference symbol, which is normally 15 kHz, may be reduced to 7.5 kHz. Alternatively, a so-called 512 IFFT with 512 samples output within the 10 MHz frequency bandwidth may be applied. This means, a time length of a reference symbol with respect to reference symbols of the present art may be reduced by the IFFT for example to half a time length of an OFDM data symbol (see Figure 8).

Typically, the number of samples of an IFFT corresponds to powers of two. According to the following alternatives, only a part of the input of the IFFT is occupied with values unequal to zero. Therefore, in a first alternative, the IFFT may be performed across a predefined number of OFDM subcarriers within the 10 MHz frequency bandwidth, such that a frequency bandwidth of the first and the at least second fractions of the first and the at least second reference signal is smaller than a frequency bandwidth of the first and the at least second radio resource element divided by the number of the first and the at least second reference signal superimposed to the data signal. According to a second alternative, a time range of the first and the at least second fractions of the first and the at least second reference signal is smaller than a time range of the first and the at least second radio resource element divided by the number of the first and the at least second reference signal superimposed to the data signal. The predefined number of OFDM subcarriers may be for example 2100.

According to a further embodiment, an IDFT (IDFT = Inverse Discrete Fourier Transform) may be used, when the number of reference signals is small. According to an even further embodiment, when a distribution of reference signals is limited to a small frequency range an IFFT or IDFT may be applied to a restricted number of subcarriers (e.g. to 12 subcarriers instead to 1024 subcarriers for 10 MHz). In such a case an interpolation may be performed by the base band signal processing unit to match a sampling rate of the pilot signals to a sampling rate of the data signals.

By executing the IFFTs for the reference signals and the data signals respective time signals are generated, which may already obtain a corresponding mapping to the frequency time grid of the radio resource elements.

In a second sub-step, the FFT module FFT-M performs a superposition or superimposing of the time signals of the one or several data signals with the time signals of the two or more reference signals by adding complex valued time sample outputs of the respective IFFTs or IDFTs provided by the previous sub-step.

Instead of OFDM reference signals and OFDM data symbols, the method MET may be alternatively applied to pulse shaped reference symbols and data symbols such as generated by so-called FBMC transmission (FBMC = Filterbank based Multi Carrier). FBMC is for example described in "Filterbank Based Multi Carrier Transmission (FBMC) - evolving OFDM", F. Schaich, p. 1051 - 1058, 2010 European Wireless Conference. Thereby, the reference signals are generated with a respective dimensioning for a target spacing via a synthesis filter bank (see Fig. 4 of the above mentioned publication).

With respect to the prior art (see Figure 2), the first reference signal P1 and the second reference signal P2 are allocated to different antenna ports AP0, AP1 and also to different radio resource elements. With respect to the exemplary embodiment of Figure 5, a first group of reference signals containing the first reference signal P1 and the second reference signal P2 may be allocated to two radio resource elements, which are given by coordinates SC1/S1 and SC1/S2 of the first and the second frequency time grids FTG1, FTG2. Accordingly, a second group, a third group and a fourth group of reference signals each containing a further first reference signal P1 and a further second reference signal P2 may be allocated to further radio resource elements, which are given exemplarily by coordinates SC7/S1 and SC7/S2 for the second group, by coordinates SC3/S5 and SC3/S6 for the third group and by coordinates SC9/S5 and SC9/S6 for the fourth group. This means, groups of first reference signals P1 and second reference signals P2 are allocated to same antenna ports AP0, AP1 and also to same radio resource element groups. An allocation of data signals to the antenna ports AP0, AP1 and the radio resource elements is not shown in Figure 5 for simplification but in Figures 6a) and 6b) for an extract of 4x3=12 radio resource elements of the first and the second frequency time grid FTG1, FTG2, which is indicated in Figures 6b) by a dashed plotted rectangle.

According to Figure 6a), the scheduler may allocate to the first antenna element AE1 and the second antenna element AE2 a first data-carrying modulation symbol DS1 to a first radio resource element RRE1 given by coordinates SC10/S4, a second data-carrying modulation symbol DS2 to a second radio resource element RRE2 given by coordinates SC10/S5, a third data-carrying modulation symbol DS3 to a third radio resource element RRE3 given by coordinates SC10/S6, a fourth data-carrying modulation symbol DS4 to a fourth radio resource element RRE4 given by coordinates SC10/S7, a fifth data-carrying modulation symbol DS5 to a fifth radio resource element RRE5 given by coordinates SC9/S4, no data-carrying modulation symbol to a sixth radio resource element RRE6 given by coordinates SC9/S5, a sixth data-carrying modulation symbol DS6 to a seventh radio resource element RRE7 given by coordinates SC9/S6, a seventh data-carrying modulation symbol DS7 to an eighth radio resource element RRE8 given by coordinates SC9/S7, an eighth data-carrying modulation symbol DS8 to a ninth radio resource element RRE9 given by coordinates SC8/S4, a ninth data-carrying modulation symbol DS9 to a tenth radio resource element RRE10 given by coordinates SC8/S5, a tenth data-carrying modulation symbol DS10 to an eleventh radio resource element RRE11 given by coordinates SC8/S6 and an eleventh data-carrying modulation symbol DS11 to a twelfth radio resource element RRE12 given by coordinates SC8/S7. The data-carrying modulation symbols DS1 to DS11 may be allocated for a transmission to the mobile station MS or may be allocated for a transmission to different mobile stations (e.g. data-carrying modulation symbols DS1 to DS4 may be allocated for a transmission to a first mobile station, data-carrying modulation symbols DS5 to DS9 may be allocated for a transmission to a second mobile station and data-carrying modulation symbols DS10 and DS11 may be allocated for a transmission to a third mobile station). Whether the data-carrying modulation symbols are transmitted only via one of the antenna elements AE1, AE2 or via both of the antenna elements AE1, AE2 by applying beam-forming may be determined by applying corresponding complex weight factors $W_{ij}$ as shown in equation (2). The allocation of the first reference signal P1 and the second reference signal P2 to the sixth radio resource element RRE6 and to the seventh radio resource element RRE7 is shown with respect to Figure 6b) in more detail. In comparison to Figure 2, the first reference signal P1 and the second reference signal P2 are both allocated to an OFDM subcarrier SC9 and to time slots S5 and S6 and are both compressed in a frequency range by a factor of two and extended in a time range also by the factor of two. The first reference signal P1 is allocated to higher frequency parts of the OFDM subcarrier SC9 and the second reference signal P2 is allocated to lower frequency parts of the OFDM subcarrier SC9.

If cyclic prefixes are used for the transmission of the transmit signal such as in 3GPP LTE, the first reference signal P1 and the second reference signal P2 may be spread over time across the unused sixth radio resource element RRE6, the cyclic prefix of the sixth data-carrying modulation symbol DS6 and the sixth data-carrying modulation symbol DS6 itself. According to a first option, a cyclic prefix may be applied in front of the time spread or frequency spread first and second reference signal P1, P2. According to a second option, the time spread first and second reference signal P1, P2 may be split in two parts of equal time length and cyclic prefixes may be set in front of both two parts.

An embodiment based on FBMC may not apply cyclic prefixes. Also a further embodiment based on conventional OFDM may be applied without using cyclic prefixes.

A time length $T_P$ of the first reference signal P1 and the second reference signal P2 may be given for example by following general equation:

$$T_P = N_P \cdot T_{RRE} \qquad (3)$$

with $Np$ as a number of antenna ports and $T_{RRE}$ as a time length of a single radio resource element RRE without a time length for a so-called cyclic prefix, which is identical to a time length of a single data-carrying modulation symbol.

A frequency width $f_P$ of the first reference signal P1 and the second reference signal P2 may be given for example by following general equation:

$$f_P = \frac{1}{N_P} \cdot f_{RRE} \qquad (4)$$

with $f_{RRE}$ as a frequency width of the single radio resource element RRE, which is a frequency width of an OFDM subcarrier of 15 kHz in case of LTE.

In general, the time length $T_P$ and the frequency width $f_P$ of the first reference signal P1 and the second reference signal P2 shall be determined in such a way, that the first reference signal P1 and the second reference signal P2 are interference free at least within one radio resource element such as the sixth radio resource element RRE6 shown in Figure 6. The interference free range within the sixth radio resource element RRE6 has a time length of the cyclic prefix and a time length of a useful symbol time.

When the first reference signal P1 and the second reference signal P2 shown in Figure 6b) are superimposed to the data-carrying modulation symbols DS1 to DS11 shown in Figure 6a) resulting superimposed signal structures such as shown in Figure 6c) and Figure 6d) are obtained for the first antenna port AP0 and the second antenna port AP1. With respect to the first antenna port AP0, the sixth radio resource element RRE6 contains a first time component of the first reference signal P1 and no data-carrying modulation symbol and the seventh radio resource element RRE7 contains a second time component of the first reference signal P1 and the sixth data-carrying modulation symbol DS6 superimposed to the second time component (see Figure 6c). Accordingly with respect to the second antenna port AP1, the sixth radio resource element RRE6 contains a first time component of the second reference signal P2 and no data-carrying modulation symbol and the seventh radio resource element RRE7 contains a second time component of the second reference signal P2 and the sixth data-carrying modulation symbol DS6 superimposed to the second time component (see Figure 6d).

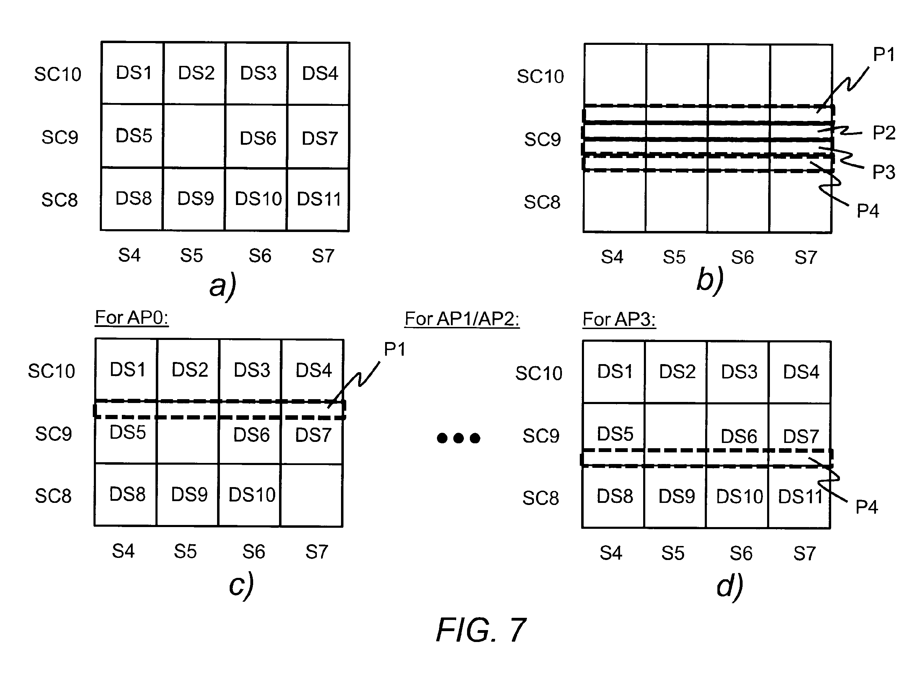

With respect to an alternative embodiment, reference signals and data signals may be processed via four instead of two antenna ports (compare with Figure 1). An allocation of data-carrying modulation symbols to radio resource elements may be the same as for the previous embodiment (see Figure 6a) and Figure 7a). Due to the increased number of antenna ports the time length $T_P$ of reference signals P1, P2, P3

and P4 is increased to four symbol times (see equation (3) and Figure 7b)) and the frequency width $f_P$ of the reference signals P1, P2, P3 and P4 is reduced to a quarter of the frequency width of the OFDM subcarrier (see equation (4) and Figure 7b)). The first reference signal P1, the second reference signal P2, a third reference signal P3 and a fourth reference signal P4 are allocated to the OFDM subcarrier SC9 and to time slots S4, S5, S6 and S7 and are compressed in a frequency range by a factor of four and extended in a time range also by the factor of four. The first reference signal P1 may be allocated to a highest frequency components of the OFDM subcarrier SC9, the second reference signal P2 may be allocated to lower frequency components of the OFDM subcarrier SC9, the third reference signal P3 may be allocated to even lower frequency components of the OFDM subcarrier SC9 and the fourth reference signal P4 may be allocated to lowest frequency component of the OFDM subcarrier SC9. A mapping of the data-carrying modulation symbols DS1 to DS11 and the reference signals P1 to P4 to antenna ports AP0, AP1, AP2 and AP3 is shown by Figure 7c) and Figure 7d) exemplarily for the first antenna port AP0 and a fourth antenna port AP3. With respect to the first antenna port AP0 (see Figure 7c)), the fifth radio resource element RRE5 contains a first time component of the first reference signal P1 and the fifth data-carrying modulation symbol DS5 superimposed to the first time component, the sixth radio resource element RRE6 contains a second time component of the first reference signal P1 and no data-carrying modulation symbol, the seventh radio resource element RRE7 contains a third time component of the first reference signal P1 and the sixth data-carrying modulation symbol DS6 superimposed to the third time component and the eighth radio resource element RRE8 contains a fourth time component of the first reference signal P1 and the seventh data-carrying modulation symbol DS7 superimposed to the fourth time component. With respect to the fourth antenna port AP3 (see Figure 7d)), the fifth radio resource element RRE5 contains a first time component of the fourth reference signal P4 and the fifth data-carrying modulation symbol DS5 superimposed to the first time component, the sixth radio resource element RRE6 contains a second time component of the fourth reference signal P4 and no data-carrying modulation symbol, the seventh radio resource element RRE7 contains a third time component of the fourth reference signal P4 and the sixth data-carrying modulation symbol DS6 superimposed to the third time component and the eighth radio resource element RRE8 contains a fourth time component of the fourth reference signal P4 and the seventh data-carrying modulation symbol DS7 superimposed to the fourth time component. A similar mapping may be applied for the second reference signal P2 with respect to the second antenna port AP1 and for the third reference signal P3 with respect to the third antenna port AP1, which is not shown in Figure 7 for simplification.

Preferably, the data-carrying modulation symbols DS5 to DS7 may be allocated for a transmission to a same mobile station such as the mobile station MS, so that the mobile station MS does not need to process any superimposed data-carrying modulation symbols, for which the mobile station MS is not a destination.

With respect to a further alternative embodiment, the first reference signal P1 and the second reference signal P2 may be compressed in time instead of compressing in a frequency width as shown in Figure 8. An allocation of data-carrying modulation symbols to radio resource elements may be the same as for the previous embodiments (see Figures 6a), 7a) and 8a)). The first reference signal P1 and the second reference signal P2 are allocated to OFDM subcarriers SC9, SC10 and to time slot S5 and are compressed in a time range by a factor of two and extended in a frequency range also by the factor of two. The first reference signal P1 may be allocated to a first half of the time slot S5 and the second reference signal P2 may be allocated to a second half of the time slot S5. A mapping of the data-carrying modulation symbols DS1 to DS11 and the reference signals P1, P2 to the antenna ports AP0, AP1 is shown by Figure 8c) and Figure 8d). With respect to the first antenna port AP0 (see Figure 8c)), the second radio resource element RRE2 contains a first frequency component of the first reference signal P1 and the second data-carrying modulation symbol DS2 superimposed to the first frequency component of the first reference signal P1 and the sixth radio resource element RRE6 contains a second frequency component of the first reference signal P1 and no data-carrying modulation symbol. With respect to the second antenna port AP1 (see Figure 8d)), the second radio resource element RRE2 contains a first frequency component of the second reference signal P2 and the second data-carrying modulation symbol DS2 superimposed to the first frequency component of the second reference signal P2 and the sixth radio resource element RRE6 contains a second frequency component of the second reference signal P2 and no data-carrying modulation symbol.

First reference signals P1 of a composed transmit signal based on one of the embodiments for radio resource and antenna mapping as described above may be provided in a next step M1/2 from a transmitter unit TU (see Figure 10) of the transmitter apparatus TA to the first antenna element AE1 and are received at the first antenna element AE1 in a further step M1/3. In parallel, the second reference signals P2 may be provided from the transmitter unit of the transmitter apparatus TA to the second antenna element AE2.

Alternatively, the first reference signals P1 and the second reference signals P2 of the composed transmit signal may be pre-coded and may be provided to the first antenna element AE1 and the second antenna element AE2.

When beam-forming is applied for the transmission of the data-carrying modulation symbols DS1 to DS11, also the data-carrying modulation symbols DS1 to DS11 are provided to the second antenna element AE2. Alternatively, when independent data streams are transmitted via the first and the second antenna element AE1, AE2, instead of the data-carrying modulation symbols DS1 to DS11 further data-carrying modulation symbols are provided from the transmitter apparatus TA to the second antenna element AE2, which is not shown in Figure 4 for simplification.

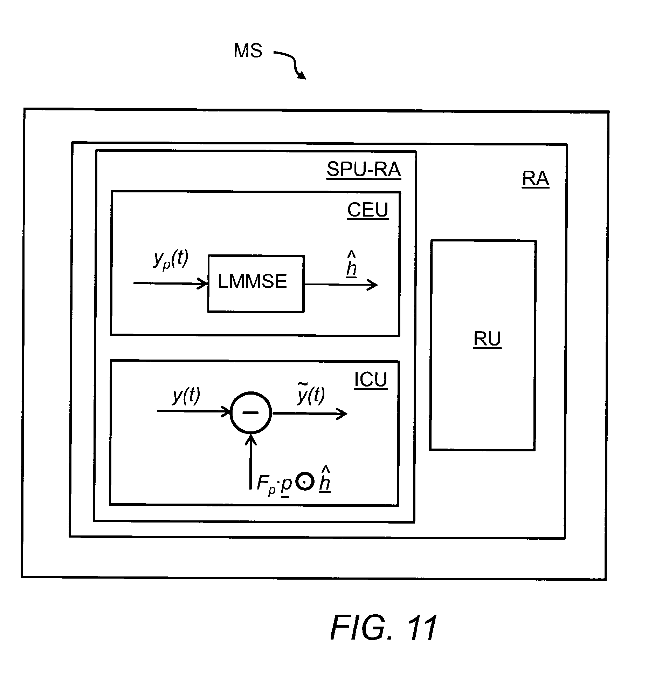

In a next step M1/4, the first reference signals P1 and the data-carrying modulation symbols DS1 to DS11 may be transmitted by the transmit signal from the first antenna element AE1 to an antenna element of the receiver apparatus RA such as the antenna element AE of the mobile station MS (see Figure 3), may be provided as a receive signal from the antenna element AE to the receiver apparatus RA and may be received at a receiver unit RU (see Figure 11) of the receiver apparatus RA by a further step M1/5. Similarly, the second reference signals P2 and the data-carrying modulation symbols DS1 to DS11 may be transmitted by the transmit signal from the second antenna element AE2 to the antenna element AE, may be provided by the receive signal from the antenna element AE to the receiver apparatus RA and may be received at the receiver unit of the receiver apparatus RA.

In a next step M1/6, a channel estimation unit CEU of a signal processing unit SPU-RA of the receiver apparatus RA (see Figure 11) estimates a channel matrix h for the transmission channel TC between the transmitter apparatus TA and the receiver apparatus RA based on an interference free component of the first reference signals P1 and the second reference signals P2 for example by an algorithm as described in the following. While classical OFDM channel estimation is based on orthogonal resource elements, the embodiments of the invention are dealing with pilot resource elements which have a remaining cross-correlation between each other and thus are non-orthogonal. The advantage is though, that an interference free component exists without impact from yet unknown data symbols. The reference signals themselves are known at the receiver apparatus, thus the cross-correlations are known and this knowledge can be used by applying principles of multi-user detection onto the detection of non-orthogonal pilot resource elements. An estimation algorithm using for example the equations (5) ff. is based on an linear minimum mean squared error channel estimator (LMMSE), which is also known as Wiener Filter, to deal with remaining cross-correlation and to obtain channel estimates by a linear estimator which have a minimized mean squared error.

When data-carrying modulation symbols are located adjacent to the reference signals P1, P2, P3, P4 in the frequency direction, the data-carrying modulation symbols produce side-lobes, which interfere with the components of reference signals P1, P2, P3, P4, which are not superimposed with any data-carrying modulation symbol. With respect to Figure 6c) for example, the second data-carrying modulation symbol DS2 may generate side-lobes to the first fraction of the first reference signal P1, which is located in the sixth radio resource element RRE6.

This problem can be circumvented for example by allocating only reference signals and no data-carrying modulation symbols to all OFDM subcarriers of a specific symbol time such as for the symbol position S5.

According to an alternative, the problem may be circumvented by applying the FBMC transmission as described above.

With respect to a further alternative, symmetry of the data-carrying modulation symbols around the radio resource element, which is only reserved for reference signals (e.g. the sixth radio resource element RRE6 in Figures 7c) and 7d) may be exploited for a side-lobe cancellation. This means, that the data-carrying modulation symbols must be allocated to radio resource elements around the radio resource element exclusively reserved for the reference signals according to a predefined criterion. Therefore, a matched filter may span a complete length of a reference signal and also several data-carrying modulation symbols of neighboring radio resource elements in a time direction. This requires that a complex-valued sum of the interference of data-carrying modulation symbols in a time frame before a time frame for transmitting the reference signals must be equal to a negative complex-valued sum of the interference of further data-carrying modulation symbols in a time frame after the time frame for transmitting the reference signals. Such an alternative is similar to a well-known auxiliary pilot scheme of the FBMC transmission.

For achieving the symmetry more easily, a number of adjacent radio resource elements, which contain fractions of the reference signals P1, P2, P3, P4 but no data-carrying modulation symbols, may be an even number. With respect to the embodiment of Figure 7, in a further embodiment and in addition to the sixth radio resource element RRE6 also the seventh radio resource element RRE7 may not contain any data-carrying modulation symbol. For a number of four antenna elements at a transmitter side the overall time length of the reference signals P1, P2, P3, P4 may be four OFDM symbols such as shown in Figure 8, the number of adjacent radio resource elements only containing components of the reference signals P1, P2, P3, P4 an no data-carrying modulation symbols may be two (not shown in Figure 8).

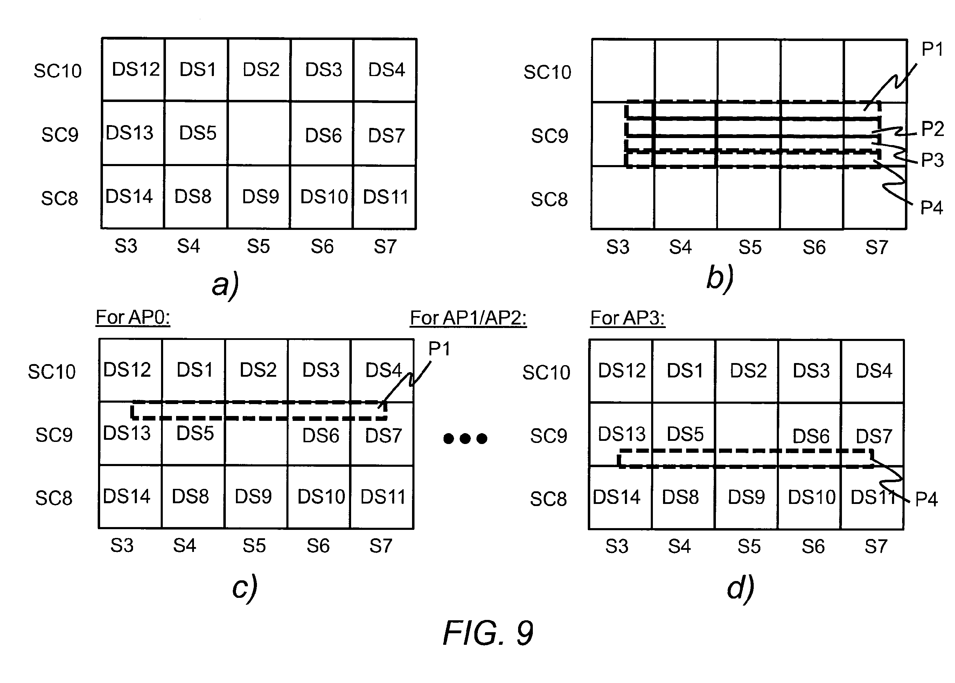

In a further alternative with respect to the embodiment of Figure 9, in an even further embodiment for an odd number of adjacent radio resource elements explicitly reserved for reference signals, a time position of the reference signals P1, P2, P3, P4 may be shifted by a half time length of a transmission symbol such as an OFDM symbol in a negative time direction such that a time length of the reference signals P1, P2, P3, P4 completely cover symbol positions S4, S5 and S6 and half the amount of symbol position S7 and of a further symbol position S3. Figure 9 shows in comparison to Figure 7 further data-carrying modulation symbols DS12 to DS14 at coordinates SC9/S3, SC10/S3 and SC10/S3 of the frequency time grid.

With respect to a last alternative, which may be combined with the previous alternatives, the reference signals P1, P2, P3, P4 may be transmitted with a larger output power than the data-carrying modulation symbols. Thereby, an SINR for receiving the reference signals can be increased and the effect of the side-lobes can be reduced.

The channel estimation for non-orthogonal frequency subcarriers may be based on an LMMSE algorithm (LMMSE = Linear Minimum Mean Square Error) such as described for example in S. Kay, Fundamentals of statistical signal processing: Estimation Theory. Prentice Hall, 1991. Thereby, a Wiener filter deals with the non-orthogonality of the frequency subcarriers.

The following notation will be used in the following description: $N$ is a length of the IFFT such as a 1024-IFFT and is usually predefined by a radio communication standard such as 3GPP LTE, L is a time length of a reference signal (in terms of number of samples), which has been transmitted from the transmitter apparatus TA, $K$ is a number of OFDM subcarriers, which can be seen as the processing window of the LMMSE estimator, which should be related to the channel coherence bandwidth (the frequency range where the channel is almost constant).

For the following mathematical description it is assumed, that the transmission channel TC is approximately constant for a block of $K$ OFDM subcarriers. It is further assumed, that side-lobes of subcarriers outside the block are negligible.

A k-th subcarrier sequence may be described by following equation:

$$\underset{[L \times 1]}{f_k} = \left[ e^{\left(j\frac{2\pi k \cdot 0}{N}\right)}, \dots, e^{\left(j\frac{2\pi k \cdot (L-1)}{N}\right)} \right] \qquad (5)$$

A Fourier matrix $\mathbf{F_P}$ for generating frequency shifts of the respective subcarriers may be described by following equation:

$$\underset{[L \times K]}{\mathbf{F_P}} = [f_1 | \dots | f_K] \qquad (6)$$

The Fourier matrix $\mathbf{F_P}$ is written for an interference free part of the reference signal P1, P2, P3, P4 such as shown by the sixth radio resource element RRE6 as shown in Figure 6. The Fourier matrix $F$ is preferably constructed in such a way, that the interference free part is at a beginning of the reference signal P1, P2, P3, P4 (see Figure 6). When the interference free part is for example a second fraction of a whole reference signal, such as shown in Figure 7, the subcarrier sequences $f_k$ have to be rotated accordingly.

A system model for a time domain complex-valued receive sample time signal vector $\mathbf{y_P}(t)$, which is received at the receiver apparatus RA, may be described by following equation:

$$\underset{[L \times 1]}{\mathbf{y_P}(t)} = \underset{[L \times K]}{\mathbf{F_P}} \cdot \underset{[K \times 1]}{\mathbf{p}} \cdot \underset{[1 \times 1]}{h} + \underset{[L \times 1]}{\mathbf{n}} \qquad (7)$$

$\mathbf{p} = \begin{bmatrix} 0 \\ 0 \\ p_1 \\ 0 \\ p_2 \\ \vdots \\ 0 \end{bmatrix}$ is as a reference signal vector with entries $p_i$ for OFDM subcarriers containing a reference signal and with zero else.

The time domain receive sample vector $\mathbf{y_P}(t)$ corresponds to the interference free component of the received reference signals P1, P2, P3, P4. The interference component corresponds to that fractions of the reference signals P1, P2, P3, and P4, which are not superimposed with one of the data-carrying modulation symbols.

The channel estimation unit CEU preferably working as a linear estimator may be based on following equations:

An estimated scalar $\hat{h}$ of the transmission channel with respect to a single antenna element may be given as:

$$\underset{[1 \times 1]}{\hat{h}} = \underset{[1 \times L]}{\mathbf{w^H}} \underset{[L \times 1]}{\mathbf{y_P}(t)} \qquad (8)$$

with $\mathbf{W^H}$ being estimator weights for weighting the time signal vector $\mathbf{y_P}(t)$.

An estimator weight vector $w$, according to the Wiener-Hopf equation, may be determined by following equation:

$$\underset{[1 \times L]}{\mathbf{w}} = \underset{[L \times L]}{\mathbf{E}\left\{\mathbf{y_P y_P^H}\right\}^{-1}} \cdot \underset{[L \times 1]}{\mathbf{E}\left\{\mathbf{y_P} h^*\right\}} \qquad (9)$$

with $\mathbf{E}\{...\}$ being the expectation and $h^*$ being the conjugate of h.

The required auto-covarince matrix may be computed as follows:

$$\mathbf{E}\left\{\mathbf{y_P y_P^H}\right\} = \mathbf{E}\{|h|^2\} \cdot \mathbf{F_P p p^H F_P^H} + \sigma_n^2 \mathbf{I} \qquad (10)$$

with $\mathbf{E}\{|h|^2\}$ being an average path gain, $\sigma_n^2$ being a noise variance and $\mathbf{I}$ being the identity matrix.

The cross-covariance may be computed as follows:

$$\mathbf{E}\{y_P h^*\} = \mathbf{E}\{|h|^2\} \cdot \mathbf{F_P p} \qquad (11)$$

By inserting equations (10) and (11) in equation (9) following equation is obtained:

$$\mathbf{w} = \left(\mathbf{E}\{|h|^2\} \cdot \mathbf{F_P p p^H F_P^H} + \sigma_n^2 \mathbf{I}\right)^{-1} \cdot \mathbf{E}\{|h|^2\} \cdot \mathbf{F_P} \cdot \mathbf{p} \qquad (12)$$

The channel estimation unit CEU requires knowledge of the average path gain $\mathbf{E}\{|h|^2\}$ and the noise variance $\sigma_n^2$. Such knowledge may be obtained for example from known state-of the art algorithms used in handover measurements.

Based on the measured time domain complex-valued receive sample vector y and based on the determined weight vector $w$ the channel estimation unit CEU is able to determine an estimate of the transmission channel matrix $\hat{\mathbf{h}}$.

The channel estimation unit CEU may be based on a so-called sliding window type estimator, which estimates a frequency of a center frequency subcarrier of a respective set of reference signals, which are considered for the channel estimation. This means that the processing window computes a center frequency range of interest and can be shifted in order to obtain all values of interest over the full frequency band.

With respect to a further embodiment, a superposition of reference signals and data signals with data-carrying modulation symbols inserted to frequency neighboring radio resource elements of a radio resource element, which only contains a fraction of a reference signal P1, P2, P3, P4 and which is shown for example in Figures 6c), 6d), 7c), 7d), 8c) and 8d) by the sixth radio resource element RRE6, a following algorithm may be applied by the channel estimation unit CEU, in which following further notation will be used: $K_R$ is a number of OFDM subcarriers carrying a reference signal, $K_D$ is a number of neighboring OFDM subcarriers carrying a data signal, like DS2 and DS9 in Figure 7. Parameters and functions with same notation are the same parameters and functions as described above for the embodiment of the superposition of reference signals and data signals with no data-carrying modulation symbols inserted to radio resource elements of a specific symbol time.

A Fourier matrix $G$ for a set of neighboring OFDM subcarriers (similar to the above used matrix $\mathbf{F_P}$) may be described by following equation:

$$\underset{[L \times K_D]}{\mathbf{G}} = [f_1 | \dots | f_{K_D}] \qquad (13)$$

The Fourier matrix $\mathbf{G}$ contains for the neighboring OFDM subcarriers carrying a data signal a set of DFT vectors (DFT = Discrete Fourier Transform), which all have approximately a same channel transfer function. (This amount of subcarriers with approximately the same DTF is again depending on coherence bandwidth and thus on delay spread and can be either derived from geometrical dimensions (cell radius, positions of reflectors, etc) of the radio communication system or from delay spread estimates based on e.g. past received data.)

For the further embodiment, a system model for the time domain complex-valued receive sample vector $\mathbf{y_P}(t)$ may be described by following equation:

$$\frac{\mathbf{y_P}(t)}{[L \times 1]} = \left( \frac{\mathbf{F_P}}{[L \times K_R]} \cdot \frac{\mathbf{p}}{[K_R \times 1]} + \frac{\mathbf{G}}{[L \times K_D]} \cdot \frac{\mathbf{s}}{[K_D \times 1]} \right) \cdot \frac{h}{[1 \times 1]} + \frac{\mathbf{n}}{[L \times 1]} \quad (14)$$

with $\mathbf{s}$ being a vector of the up-to-now unknown data symbols Also for the further embodiment, the time domain receive sample vector $\mathbf{y_P}(t)$ corresponds to the interference free component of the reference signals P1, P2, P3, P4. The interference component is that fraction of the reference signals P1, P2, P3, P4, which is not superimposed with one of the data-carrying modulation symbols.

Equations (10) and (11) as given above may be modified to following equations (15) and (16) for the further embodiment:

$$\mathbf{E}\{\mathbf{y_P}\mathbf{y_P^H}\} = E\{|h|^2\} \cdot \left(\mathbf{F_P}\mathbf{pp^H}\mathbf{F_P^H} + \mathbf{G} \cdot \mathbf{E}\{\mathbf{ss^H}\} \cdot \mathbf{G^H}\right) + \sigma_n^2 \mathbf{I} \quad (15)$$

with $\mathbf{I} = \mathbf{E}\{\mathbf{ss^H}\}$.

$$\mathbf{E}\{\mathbf{y_P}h^*\} = \mathbf{E}\{|h|^2\} \cdot \left(\mathbf{F_P} + \mathbf{E}\{\mathbf{G} \cdot \mathbf{s}\}\right) = \mathbf{E}\{|h|^2\} \cdot \mathbf{F_P} \cdot \mathbf{p} \quad (16)$$

with $\underset{o}{\rightarrow} = \mathbf{E}\{\mathbf{G} \cdot \mathbf{s}\}$ resulting from symbol constellations symmetric to the origin of the complex plane (like QPSK, 16-QAM, ...).

By inserting equations (18) and (19) in equation (12) following equation is obtained:

$$\mathbf{w} = \left(\mathbf{E}\{|h|^2\} \cdot \left(\mathbf{F_P}\mathbf{pp^H}\mathbf{F_P^H} + \mathbf{GG^H}\right) + \sigma_n^2 \mathbf{I}\right)^{-1} \cdot \mathbf{E}\{|h|^2\} \cdot \mathbf{F_P} \cdot \mathbf{p} \quad (17)$$

The term $\mathbf{GG^H}$ represents the set of DFT vectors for the neighboring OFDM subcarriers carrying a data signal and the term $\mathbf{GG^H}$ is diagonal, if the neighboring data subcarriers are orthogonal. Also for the further embodiment the channel estimation unit CEU requires knowledge of the average path gain $\mathbf{E}\{|h|^2\}$ and the noise variance $\sigma_n^2$.

Similar to the previously described embodiment and also based on the measured time domain complex-valued receive sample vector $\mathbf{y_P}$ and based on the calculated weight vector $\mathbf{w}$ the channel estimation unit CEU is able to determine an estimate of the transmission channel matrix $\hat{\mathbf{h}}$.

In a further step M1/7, an interference cancellation unit ICU of the signal processing unit SPU-RA (see Figure 11) eliminates the interference part of the received reference signals P1, P2, P3, P4 with respect to a received overall signal $y(t)$, which contains an entire reference signal and corresponding superimposed data-carrying modulation symbols such as for example an overall signal received by the radio resource elements RRE5, RRE6, RRE7 and RRE8 such as shown in Figures 7c) and 7d).

The interference cancellation may be based on following equation for obtaining an interference free signal vector $\tilde{y}(t)$:

$$\tilde{y}(t) = y(t) - F_P \cdot \underline{p} \odot \hat{\underline{h}} \quad (18)$$

Due to a periodicity of the reference signals and assuming, that the transmission channel TC is constant during a time length of a reference signal, an interference of a reference signal to a data signal is a periodic continuation within the radio resource element, which contains a component of the reference signal but no data-carrying modulation symbol (see for example the sixth radio resource element RRE6 in Figures 7c) and 7d)). Therefore, the interference can be subtracted directly in the time domain.

Alternatively, the interference of the reference signal to the data signal can be synthesized based on the channel estimation and characteristics of the reference signals P1, P2, P3, P4. This allows to subtract the interference from the received overall signal both in the time domain and the frequency domain.

The interference free signal vector $\tilde{y}(t)$ is processed further in a conventional way for obtaining estimates of the data-carrying modulation symbols DS1 to DS11.

Figure 10 shows a block diagram of a network node BS, which contains the transmitter apparatus TA. The transmitter apparatus TA contains the signal processing unit SPU-TA and the transmit unit TU, which may be connected to the antenna system BS-AS. The signal processing unit SPU-TA may contain the scheduler SD and the FFT module FFT-M. The scheduler SD may contain the composer C. The transmit unit TU may contain for example a digital-to-analogue converter and a power amplifier for converting and amplifying the reference signals P1, P2, P3, P4 and the data-carrying modulation symbols DS1 to DS11 and providing the converted and amplified reference signals P1, P2, P3, P4 and data-carrying modulation symbols DS1 to DS11 to the antenna system BS-AS for a radio transmission to the receiver apparatus RA. The signal processing unit SPU-TA may contain hardware modules and/or software modules and may be for example a so-called base band signal processing unit.

Figure 11 shows a block diagram of a further network node MS, which contains the receiver apparatus RA. The receiver apparatus RA contains the signal processing unit SPU-RA and the receiver unit RU, which may be connected to the antenna system MS-AS. The signal processing unit SPU-RA may contain the channel estimation unit CEU and the interference cancellation unit ICU. The receiver unit RU may contain a low-noise amplifier and an analogue-to-digital converter for amplifying and converting the received signal with the reference signals P1, P2, P3, P4 and the data-carrying modulation symbols DS1 to DS11 and for providing amplified and converted received reference signals P1, P2, P3, P4 and data-carrying modulation symbols DS1 to DS11 to the signal processing unit SPU-RA. The signal processing unit SPU-RA may contain hardware modules and/or software modules and may be for example a so-called base band signal processing unit.

Further embodiments provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the embodiments of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements of the transmitter apparatus and the receiver apparatus, which are shown in Figures 9 and 10, including any functional blocks labeled as "means", "means for composing", "means for transmitting", "means for receiving", "means for estimating", etc., may be provided through the use of dedicated hardware, such as "a composer", "a transmitter" , "a receiver" , "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method (MET_TA) for composing a transmit signal, said method (MET) comprising the step (M1/1) of composing said transmit signal **characterized by**:

   - comprising in a first fraction of a frequency range of a first radio resource element (RRE2, RRE5, RRE7) a first fraction of a first reference signal (P1) superimposed with a data signal (DS2, DS5, DS6), in a first fraction of a frequency range of at least a second radio resource element (RRE6) at least a second fraction of said first reference signal (P1), in at least a second fraction of said frequency range of said first radio resource element (RRE2, RRE5, RRE7) a first fraction of at least a second reference signal (P2, P3, P4) superimposed with said data signal (DS2, DS5, DS6) and in at least a second fraction of said frequency range of said at least second radio resource element (RRE6) at least second fraction of said at least second reference signal (P2, P3, P4), wherein said first and said at least second fraction of said first radio resource element and said at least second radio resource element are non-overlapping and tangent, and wherein a frequency bandwidth of said first and said at least second fractions of said first and said at least second reference signal (P1, P2, P3, P3) is equal to or smaller than a frequency bandwidth of said first and said at least second radio resource element (RRE2, RRE5, RRE6, RRE7) divided by said number of said first and said at least second reference signal (P1, P2, P3, P4) superimposed to said data signal (DS2, DS5, DS6);

   or by

   - comprising in a first fraction of a time range of a first radio resource element (RRE2, RRE5, RRE7) a first fraction of a first reference signal (P1) superimposed with a data signal (DS2, DS5, DS6), in a first fraction of a time range of at least a second radio resource element (RRE6) at least a second fraction of said first reference signal (P1), in at least a second fraction of said time range of said first radio resource element (RRE2, RRE5, RRE7) a first fraction of at least a second reference signal (P2, P3, P4) superimposed with said data signal (DS2, DS5, DS6) and in at least a second fraction of said time range of said at least second radio resource element (RRE6) at least a second fraction of said at least second reference signal (P2, P3, P4), wherein said first and said at least second fraction of said first radio resource element and said at least second radio resource element are non-overlapping and tangent, and wherein a time range of said first and said at least second fractions of said first and said at least second reference signal (P1, P2, P3, P3) is equal to or smaller than a time range of said first and said at least second radio resource element (RRE2, RRE5, RRE6, RRE7) divided by said number of said first and said at least second reference signal (P1, P2, P3, P4) superimposed to said data signal (DS2, DS5, DS6).

2. Method (MET-TA) according to claim 1, wherein said at least second radio resource element (RRE6) is exclusively reserved for said at least second fractions of said first reference signal (P1) and said at least second reference signal (P2, P3, P4).

3. Method (MET-TA) according to claim 2, wherein data-carrying modulation symbols are symmetrically allocated around said exclusively reserved at least second radio resource element (RRE6) according to a predefined criterion.

4. Method (MET-TA) according to any of the preceding claims, wherein said first reference signal (P1) and said at least second reference signal (P2, P3, P4) are transmitted with a larger output power than the data-carrying modulation symbols.

5. Method (MET-TA) according to any of the preceding claims, wherein a number of said first and said at least a second reference signal (P1, P2, P3, P4) superimposed to said data signal (DS2, DS5, DS6) Is equal to a number of antenna elements (AE-1, AE-2) of an antenna system (BS-AS) transmitting said data signal (DS2, DS5, DS6), said first reference signal (P1) and said at least a second reference signal (P2, P3, P4).

**6.** Method (MET-TA) according to any of the preceding claims, wherein said method further comprises the step of transmitting said first reference signal (P1) from a first antenna element (AE-1) and said at least second reference signal (P2, P3, P4) from a second antenna element (AE-2) or transmitting said first reference signal (P1) and said at least second reference signal (P2, P3, P4) weighted with pre-coding factors from said first antenna elements (AE-1) and said at least second antenna element (AE-2).

**7.** A method (MET-RA) for channel estimation, said method (MET-RA) comprising the step of estimating (M1/6) a transmission channel (TC) of a receive signal **characterized by**:

- comprising in a first fraction of a frequency range of a first radio resource element (RRE2, RRE5, RRE7) a first fraction of a first reference signal (P1) superimposed with a data signal (DS2, DS5, DS6), in a first fraction of a frequency range of at least a second radio resource element (RRE6) at least a second fraction of said first reference signal (P1), in at least a second fraction of said frequency range of said first radio resource element (RRE2, RRE5, RRE7) a first fraction of at least a second reference signal (P2, P3, P4) superimposed with said data signal (DS2, DS5, DS6) and in at least a second fraction of said frequency range of said at least second radio resource element (RRE6) at least a second fraction of said at least second reference signal (P2, P3, P4), wherein said first and said at least second fraction of said first radio resource element and said at least second radio resource element are non-overlapping and tangent, and wherein a frequency bandwidth of said first and said at least second fractions of said first and said at least second reference signal (P1, P2, P3, P3) is equal to or smaller than a frequency bandwidth of said first and said at least second radio resource element (RRE2, RRE5, RRE6, RRE7) divided by said number of said first and said at least second reference signal (P1, P2, P3, P4) superimposed to said data signal (DS2, DS5, DS6);

or by

- comprising in a first fraction of a time range of first radio resource element (RRE2, RRE5, RRE7) a first fraction of a first reference signal (P1) superimposed with a data signal (DS2, DS5, DS6), in a first fraction of a time range of at least a second radio resource element (RRE6) at least a second fraction of said first reference signal (P1), In at least a second fraction of said time range of said first radio resource element (RRE2, RRE5, RRE7) a first fraction of at least a second reference signal (P2, P3, P4) superimposed with said data signal (DS2, DS5, DS6) and in at least a second fraction of said time range of said at least second radio resource element (RRE6) at least a second fraction of said at least second reference signal (P2, P3, P4), wherein said first and said at least second fraction of said first radio resource element and said at least second radio resource element are non-overlapping and tangent, and wherein a time range of said first and said at least second fractions of said first and said at least second reference signal (P1, P2, P3, P3) is equal to or smaller than a time range of said first and said at least second radio resource element (RRE2, RRE5, RRE6, RRE7) divided by said number of said first and said at least second reference signal (P1, P2, P3, P4) superimposed to said data signal (DS2, DS5, DS6).

**8.** A computer program having a program code for performing one of the methods of any of the preceding claims, when the computer program is executed on a computer or processor.

**9.** A transmitter apparatus (TA) for allocating data signals and reference signals to radio resource elements in a radio communication system (RCS), said transmitter apparatus (TA) comprising means (SD) for composing a transmit signal **characterized by**:

- comprising in a first fraction of a frequency range of a first radio resource element (RRE2, RRE5, RRE7) a first fraction of a first reference signal (P1) superimposed with a data signal (DS2, DS5, DS6), In a first fraction of a frequency range of at least a second radio resource element (RRE6) at least a second fraction of said first reference signal (P1), in at least a second fraction of said frequency range of said first radio resource element (RRE2, RRE5, RRE7) a first fraction of at least a second reference signal (P2, P3, P4) superimposed with said data signal (DS2, DS5, DS6) and in at least a second fraction of said frequency range of said at least second radio resource element (RRE6) at least a second fraction of said at least second reference signal (P2, P3, P4), wherein said first and said at least second fraction of said first radio resource element and said at least second radio resource element are non-overlapping and tangent, and wherein a frequency bandwidth of said first and said at least second fractions of said first and said at least second reference signal (P1, P2, P3, P3) is equal to or smaller than a frequency bandwidth of said first and said at least second radio resource element (RRE2, RRE5, RRE6, RRE7) divided by said number of said first and said at least second reference signal (P1, P2, P3, P4) superimposed to said data signal (DS2, DS5, DS6);

or by

- comprising in a first fraction of a time range of a first radio resource element (RRE2, RRE5, RRE7) a first fraction of a first reference signal (P1) superimposed with a data signal (DS2, DS5, DS6), in a first fraction of a time range of at least a second radio resource element (RRE6) at least a second fraction of said first reference signal (P1), in at least a second fraction of said time range of said first radio resource element (RRE2, RRE5, RRE7) a first fraction of at least a second reference signal (P2, P3, P4) superimposed with said data signal (DS2, DS5, DS6) and in at least a second fraction of said time range of said at least second radio resource element (RRE6) at least a second fraction of said at least second reference signal (P2, P3, P4), wherein said first and said at least second fraction of said first radio resource element and said at least second radio resource element are non-overlapping and tangent, and wherein a time range of said first and said at least second fractions of said first and said at least second reference signal (P1, P2, P3, P3) is equal to or smaller than a time range of said first and said at least second radio resource element (RRE2, RRE5, RRE6, RRE7) divided by said number of said first and said at least second reference signal (P1, P2, P3, P4) superimposed to said data signal (DS2, DS5, DS6).

10. A first network node comprising a transmitter apparatus (TA) according to claim 9.

11. First network node according to claim 10, wherein said first network node is a wireless base station (BS), a wireless access point, a remote radio head or a mobile station.

12. A receiver apparatus (RA) for channel estimation In a radio communication system (RCS), said receiver apparatus (RA) comprising means (CEU) for estimating a transmission channel (TC) of a receive signal **characterized by**:

- comprising in a first fraction of a frequency range of a first radio resource element (RRE2, RRE5, RRE7) a first fraction of a first reference signal (P1) superimposed with a data signal (DS2, DS5, DS6), in a first fraction of a frequency range of at least a second radio resource element (RRE6) at least a second fraction of said first reference signal (P1), in at least a second fraction of said frequency range of said first radio resource element (RRE2, RRE5, RRE7) a first fraction of at least a second reference signal (P2, P3, P4) superimposed with said data signal (DS2, DS5, DS6) and in at least a second fraction of said frequency range of said at least second radio resource element (RRE6) at least a second fraction of said at least second reference signal (P2, P3, P4), wherein said first and said at least second fraction of said first radio resource element and said at least second radio resource element are non-overlapping and tangent, and wherein a frequency bandwidth of said first and said at least second fractions of said first and said at least second reference signal (P1, P2, P3, P3) is equal to or smaller than a frequency bandwidth of said first and said at least second radio resource element (RRE2, RRE5, RRE6, RRE7) divided by said number of said first and said at least second reference signal (P1, P2, P3, P4) superimposed to said data signal (DS2, DS5, DS6);

or by

- comprising in a first fraction of a time range of a first radio resource element (RRE2, RRE5, RRE7) a first fraction of a first reference signal (P1) superimposed with a data signal (DS2, DS5, DS6), in a first fraction of a time range of at least a second radio resource element (RRE6) at least a second fraction of said first reference signal (P1), in at least a second fraction of said time range of said first radio resource element (RRE2, RRE5, RRE7) a first fraction of at least a second reference signal (P2, P3, P4) superimposed with said data signal (DS2, DS5, DS6) and in at least a second fraction of said time range of said at least second radio resource element (RRE6) at least a second fraction of said at least second reference signal (P2, P3, P4), wherein said first and said at least second fraction of said first radio resource element and said at least second radio resource element are non-overlapping and tangent, and wherein a time range of said first and said at least second fractions of said first and said at least second reference signal (P1, P2, P3, P3) is equal to or smaller than a time range of said first and said at least second radio resource element (RRE2, RRE5, RRE6, RRE7) divided by said number of said first and said at least second reference signal (P1, P2, P3, P4) superimposed to said data signal (DS2, DS5, DS6).

13. A second network node comprising a receiver apparatus (RA) according to claim 12.

14. Second network node according to claim 13, wherein said second network node is a wireless base station, a wireless access point, a remote radio head or a mobile station (MS).

**Patentansprüche**

1. Verfahren (MET_TA) für das Bilden eines Sendesignals, wobei besagtes Verfahren (MET) den Schritt des (M1/1) Bildens besagten Sendesignals umfasst, das **dadurch gekennzeichnet ist, dass** es:

   - in einem ersten Anteil eines Frequenzbereichs eines ersten Funkressourceelements (RRE2, RRE5, RRE7) einen ersten Anteil eines ersten Referenzsignals (P1) umfasst, überlagert von einem Datensignal (DS2, DS5, DS6), in einem ersten Anteil eines Frequenzbereichs mindestens eines zweiten Funkressourceelements (RRE6) mindestens einen zweiten Anteil besagten ersten Referenzsignals (P1), in mindestens einer zweiten Fraktion besagten Frequenzbereichs besagten ersten Funkressourceelements (RRE2, RRE5, RRE7) einen ersten Anteil mindestens eines zweiten Referenzsignals (P2, P3, P4), überlagert von besagtem Datensignal (DS2, DS5, DS6), und in mindestens einem zweiten Anteil besagten Frequenzbereichs besagen mindestens zweiten Funkressourceelements (RRE6) mindestens einen zweiten Anteil besagten mindestens zweiten Referenzsignals (P2, P3, P4), wobei besagter erster und besagter mindestens zweiter Anteil besagten ersten Funkressourceelements und das besagte, mindestens zweite Funkressourceelement nichtüberlappend und tangierend sind und wobei eine Frequenzbandbreite besagten ersten und der besagten, mindestens zweiten Anteile des besagten ersten und des besagten, mindestens zweiten Referenzsignals (P1, P2, P3, P3) gleich oder niedriger ist als ein Frequenzbandbreite besagten ersten und des besagten, mindestens zweiten Funkressourceelements (RRE2, RRE5, RRE6, RRE7), geteilt durch besagte Anzahl besagten ersten und besagten, mindestens zweiten Referenzsignals (P1, P2, P3, P4), welches besagtes Datensignal (DS2, DS5, DS6) überlagert;

   oder dass es

   - in einem ersten Anteil eines Zeitbereichs eines ersten Funkressourceelements (RRE2, RRE5, RRE7) einen ersten Anteil eines ersten Referenzsignals (P1) umfasst, überlagert von einem Datensignal (DS2, DS5, DS6), in einem ersten Anteil eines Zeitbereichs mindestens eines zweiten Funkressourceelements (RRE6) mindestens einen zweiten Anteil besagten ersten Referenzsignals (P1), in mindestens einem zweiten Anteil besagten Zeitbereichs besagten ersten Funkressourceelements (RRE2, RRE5, RRE7) einen ersten Anteil mindestens eines zweiten Referenzsignals (P2, P3, P4), überlagert von besagtem Datensignal (DS2, DS5, DS6), und in mindestens einer zweiten Fraktion besagten Zeitbereichs des besagen, mindestens zweiten Funkressourceelements (RRE6) mindestens einen zweiten Anteil des besagten, mindestens zweiten Referenzsignals (P2, P3, P4), wobei besagter erster und besagter, mindestens zweiter Anteil besagten ersten Funkressourceelements und besagtes, mindestens zweites Funkressourceelement nichtüberlappend und tangierend sind und wobei ein Zeitbereich besagter erster und der besagten, mindestens zweiten Anteile besagten ersten und besagten, mindestens zweiten Referenzsignals (P1, P2, P3, P3) gleich oder niedriger ist als ein Zeitbereich besagten ersten und besagten, mindestens zweiten Funkressourceelements (RRE2, RRE5, RRE6, RRE7), geteilt durch besagte Anzahl besagten ersten und besagten mindestens zweiten Referenzsignals (P1, P2, P3, P4), welches besagtes Datensignal (DS2, DS5, DS6) überlagert;

2. Verfahren (MET-TA) nach Anspruch 1, wobei das besagte mindestens zweite Funkressourceelement (RRE6) exklusiv für besagte mindestens zweite Anteile besagten ersten Referenzsignals (P1) und besagten mindestens zweiten Referenzsignals (P2, P3, P4) reserviert ist.

3. Verfahren (MET-TA) nach Anspruch 2, wobei datentragende Modulationssymbole nach einem vordefinierten Kriterium symmetrisch um das besagte, exklusiv reservierte, mindestens zweite Funkressourceelement (RRE6) herum zugewiesen sind.

4. Verfahren (MET-TA) nach einem jeglichen der vorgenannten Ansprüche, wobei besagtes erstes Referenzsignal (P1) und besagtes, mindestens zweites Referenzsignal (P2, P3, P4) mit einer größeren Ausgangsleistung als die datentragenden Modulationssymbole übertragen werden.

5. Verfahren (MET-TA) nach einem jeglichen der vorgenannten Ansprüche, wobei eine Anzahl besagten ersten und besagten, mindestens zweiten Referenzsignals (P1, P2, P3, P4), die besagtes Datensignal (DS2, DS5, DS6) überlagern, gleich einer Anzahl von Antennenelementen (AE-1, AE-2) eines Antennensystems (BS-AS) sind, welches besagtes Datensignal (DS2, DS5, DS6), besagtes erstes Referenzsignal (P1) und das besagte, mindestens zweite Referenzsignal (P2, P3, P4) übermittelt.

6. Verfahren (MET-TA) nach einem jeglichen der vorgenannten Ansprüche, wobei besagtes Verfahren weiterhin den Schritt umfasst, besagtes erstes Referenzsignal (P1) von einem ersten Antennenelement (AE-1) und das besagte, mindestens zweite Referenzsignal (P2, P3, P4) von einem zweiten Antennenelement (AE-2) zu übermitteln, oder das Übermitteln besagten ersten Referenzsignals (P1) und des besagten, mindestens zweiten Referenzsignals (P2, P3, P4) gewichtet mit Vorcodierungsfaktoren von besagtem erstem Antennenelement (AE-1) und dem besagten, mindestens zweiten Antennenelement (AE-2).

7. Verfahren (MET-RA) zur Kanalschätzung, wobei besagtes Verfahren (MET-RA) den Schritt des Schätzens (M1/6) eines Übertragungskanals (Transmission Channel, TC) eines Empfangssignals umfasst, **gekennzeichnet dadurch, dass** es:

- in einem ersten Anteil eines Frequenzbereichs eines ersten Funkressourceelements (RRE2, RRE5, RRE7) einen ersten Anteil eines ersten Referenzsignals (P1) umfasst, überlagert von einem Datensignal (DS2, DS5, DS6), in einem ersten Anteil eines Frequenzbereichs mindestens eines zweiten Funkressourceelements (RRE6) mindestens einen zweiten Anteil besagten ersten Referenzsignals (P1), in mindestens einer zweiten Fraktion besagten Frequenzbereichs besagten ersten Funkressourceelements (RRE2, RRE5, RRE7) einen ersten Anteil mindestens eines zweiten Referenzsignals (P2, P3, P4), überlagert von besagtem Datensignal (DS2, DS5, DS6), und in mindestens einem zweiten Anteil besagten Frequenzbereichs besagen mindestens zweiten Funkressourceelements (RRE6) mindestens einen zweiten Anteil besagten mindestens zweiten Referenzsignals (P2, P3, P4), wobei besagter erster und besagter mindestens zweiter Anteil besagten ersten Funkressourceelements und das besagte, mindestens zweite Funkressourceelement nichtüberlappend und tangierend sind und wobei eine Frequenzbandbreite besagten ersten und der besagten mindestens zweiten Anteile des besagten ersten und des besagten mindestens zweiten Referenzsignals (P1, P2, P3, P3) gleich oder niedriger ist als ein Frequenzbandbreite besagten ersten und besagten mindestens zweiten Funkressourceelements (RRE2, RRE5, RRE6, RRE7), geteilt durch besagte Anzahl besagten ersten und besagten mindestens zweiten Referenzsignals (P1, P2, P3, P4), welches besagtes Datensignal (DS2, DS5, DS6) überlagert;

oder dass es

- in einem ersten Anteil eines Zeitbereichs eines ersten Funkressourceelements (RRE2, RRE5, RRE7) einen ersten Anteil eines ersten Referenzsignals (P1) umfasst, überlagert von einem Datensignal (DS2, DS5, DS6), in einem ersten Anteil eines Zeitbereichs mindestens eines zweiten Funkressourceelements (RRE6) mindestens einen zweiten Anteil besagten ersten Referenzsignals (P1), in mindestens einer zweiten Fraktion besagten Zeitbereichs besagten ersten Funkressourceelements (RRE2, RRE5, RRE7) einen ersten Anteil mindestens eines zweiten Referenzsignals (P2, P3, P4), überlagert von besagtem Datensignal (DS2, DS5, DS6), und in mindestens einem zweiten Anteil besagten Zeitbereichs besagen mindestens zweiten Funkressourceelements (RRE6) mindestens einen zweiten Anteil besagten mindestens zweiten Referenzsignals (P2, P3, P4), wobei besagter erster und besagter, mindestens zweiter Anteil besagten ersten Funkressourceelements und besagtes, mindestens zweites Funkressourceelement nichtüberlappend und tangierend sind und wobei ein Zeitbereich besagter erster und der besagten, mindestens zweiten Anteile besagten ersten und besagten, mindestens zweiten Referenzsignals (P1, P2, P3, P3) gleich oder niedriger ist als ein Zeitbereich besagten ersten und besagten, mindestens zweiten Funkressourceelements (RRE2, RRE5, RRE6, RRE7), geteilt durch besagte Anzahl besagten ersten und besagten mindestens zweiten Referenzsignals (P1, P2, P3, P4), welches besagtes Datensignal (DS2, DS5, DS6) überlagert.

8. Ein Computerprogramm mit einem Programmcode zur Umsetzung eines der Verfahren aus einem jeglichen der vorgenannten Ansprüche, wenn das Computerprogramm auf einem Computer oder mit einem Prozessor ausgeführt wird.

9. Übermittlungsvorrichtung (Transmitter Apparatus, TA) für das Zuweisen von Datensignalen und Referenzsignalen zu Funkressourceelementen in einem Funkkommunikationssystem (Radio Communication System, RCS), wobei besagt Übermittlungsvorrichtung (TA) Mittel (SD) für das Bilden eines Sendesignals umfasst, **gekennzeichnet dadurch, dass** es:

- in einem ersten Anteil eines Frequenzbereichs eines ersten Funkressourceelements (RRE2, RRE5, RRE7) einen ersten Anteil eines ersten Referenzsignals (P1) umfasst, überlagert von einem Datensignal (DS2, DS5, DS6), in einem ersten Anteil eines Frequenzbereichs mindestens eines zweiten Funkressourceelements (RRE6) mindestens einen zweiten Anteil besagten ersten Referenzsignals (P1), in mindestens einer zweiten Fraktion besagten Frequenzbereichs besagten ersten Funkressourceelements (RRE2, RRE5, RRE7) einen ersten Anteil mindestens eines zweiten Referenzsignals (P2, P3, P4), überlagert von besagtem Datensignal (DS2, DS5, DS6), und in mindestens einem zweiten Anteil besagten Frequenzbereichs besagen mindestens zweiten Funkressourceelements (RRE6) mindestens einen zweiten Anteil besagten mindestens zweiten Referenzsignals (P2, P3, P4), wobei besagter erster und besagter mindestens zweiter Anteil besagten ersten Funkressourceelements und das besagte, mindestens zweite Funkressourceelement nichtüberlappend und tangierend sind und wobei eine Frequenzbandbreite besagten ersten und der besagten mindestens zweiten Anteile des besagten ersten und des besagten mindestens zweiten Referenzsignals (P1, P2, P3, P3) gleich oder niedriger ist als ein Frequenzbandbreite besagten ersten und besagten mindestens zweiten Funkressourceelements (RRE2, RRE5, RRE6, RRE7), geteilt durch besagte Anzahl besagten ersten und besagten mindestens zweiten Referenzsignals (P1, P2, P3, P4), welches besagtes Datensignal (DS2, DS5, DS6) überlagert;

oder dass es

- in einem ersten Anteil eines Zeitbereichs eines ersten Funkressourceelements (RRE2, RRE5, RRE7) einen ersten Anteil eines ersten Referenzsignals (P1) umfasst, überlagert von einem Datensignal (DS2, DS5, DS6), in einem ersten Anteil eines Zeitbereichs mindestens eines zweiten Funkressourceelements (RRE6) mindestens einen zweiten Anteil besagten ersten Referenzsignals (P1), in mindestens einem zweiten Anteil besagten Zeitbereichs besagten ersten Funkressourceelements (RRE2, RRE5, RRE7) einen ersten Anteil mindestens eines zweiten Referenzsignals (P2, P3, P4), überlagert von besagtem Datensignal (DS2, DS5, DS6), und in mindestens einer zweiten Fraktion besagten Zeitbereichs des besagen, mindestens zweiten Funkressourceelements (RRE6) mindestens einen zweiten Anteil des besagten, mindestens zweiten Referenzsignals (P2, P3, P4), wobei besagter erster und besagter, mindestens zweiter Anteil besagten ersten Funkressourceelements und besagtes, mindestens zweites Funkressourceelement nichtüberlappend und tangierend sind und wobei ein Zeitbereich besagter erster und der besagten, mindestens zweiten Anteile besagten ersten und besagten, mindestens zweiten Referenzsignals (P1, P2, P3, P3) gleich oder niedriger ist als ein Zeitbereich besagten ersten und besagten, mindestens zweiten Funkressourceelements (RRE2, RRE5, RRE6, RRE7), geteilt durch besagte Anzahl besagten ersten und besagten mindestens zweiten Referenzsignals (P1, P2, P3, P4), welches besagtes Datensignal (DS2, DS5, DS6) überlagert;

10. Erster Netzwerkknoten, eine Übermittlungsvorrichtung (TA) nach Anspruch 9 umfassend.

11. Erster Netzwerkknoten nach Anspruch 10, wobei besagter erster Netzwerkknoten eine drahtlose Basisstation (BS), ein drahtloser Zugangspunkt, eine entfernte Funkkopfstation oder eine Mobilstation ist.

12. Empfängervorrichtung (Receiver Apparatus, RA) zur Kanalschätzung in einem Funkkommunikationsnetzwerk (RCS), wobei besagte Empfängervorrichtung Mittel (CEU) für das Schätzen eines Übermittlungskanals (TC) eines Empfangssignals umfasst, **dadurch gekennzeichnet, dass** es:

- in einem ersten Anteil eines Frequenzbereichs eines ersten Funkressourceelements (RRE2, RRE5, RRE7) einen ersten Anteil eines ersten Referenzsignals (P1) umfasst, überlagert von einem Datensignal (DS2, DS5, DS6), in einem ersten Anteil eines Frequenzbereichs mindestens eines zweiten Funkressourceelements (RRE6) mindestens einen zweiten Anteil besagten ersten Referenzsignals (P1), in mindestens einer zweiten Fraktion besagten Frequenzbereichs besagten ersten Funkressourceelements (RRE2, RRE5, RRE7) einen ersten Anteil mindestens eines zweiten Referenzsignals (P2, P3, P4), überlagert von besagtem Datensignal (DS2, DS5, DS6), und in mindestens einem zweiten Anteil besagten Frequenzbereichs besagen mindestens zweiten Funkressourceelements (RRE6) mindestens einen zweiten Anteil besagten mindestens zweiten Referenzsignals (P2, P3, P4), wobei besagter erster und besagter mindestens zweiter Anteil besagten ersten Funkressourceelements und das besagte, mindestens zweite Funkressourceelement nichtüberlappend und tangierend sind und wobei eine Frequenzbandbreite besagten ersten und der besagten mindestens zweiten Anteile des besagten ersten und des besagten mindestens zweiten Referenzsignals (P1, P2, P3, P3) gleich oder niedriger ist als ein Frequenzbandbreite besagten ersten und besagten mindestens zweiten Funkressourceelements (RRE2, RRE5, RRE6, RRE7), geteilt durch besagte Anzahl besagten ersten und besagten mindestens zweiten Referenzsignals (P1, P2, P3, P4), welches besagtes Datensignal (DS2, DS5, DS6) überlagert;

oder dass es

- in einem ersten Anteil eines Zeitbereichs eines ersten Funkressourceelements (RRE2, RRE5, RRE7) einen ersten Anteil eines ersten Referenzsignals (P1) umfasst, überlagert von einem Datensignal (DS2, DS5, DS6), in einem ersten Anteil eines Zeitbereichs mindestens eines zweiten Funkressourceelements (RRE6) mindestens einen zweiten Anteil besagten ersten Referenzsignals (P1), in mindestens einem zweiten Anteil besagten Zeitbereichs besagten ersten Funkressourceelements (RRE2, RRE5, RRE7) einen ersten Anteil mindestens eines zweiten Referenzsignals (P2, P3, P4), überlagert von besagtem Datensignal (DS2, DS5, DS6), und in mindestens einer zweiten Fraktion besagten Zeitbereichs des besagen, mindestens zweiten Funkressourceelements (RRE6) mindestens einen zweiten Anteil des besagten, mindestens zweiten Referenzsignals (P2, P3, P4), wobei besagter erster und besagter, mindestens zweiter Anteil besagten ersten Funkressourceelements und besagtes, mindestens zweites Funkressourceelement nichtüberlappend und tangierend sind und wobei ein Zeitbereich besagter erster und der besagten, mindestens zweiten Anteile besagten ersten und besagten, mindestens zweiten Referenzsignals (P1, P2, P3, P3) gleich oder niedriger ist als ein Zeitbereich besagten ersten und besagten, mindestens zweiten Funkressourceelements (RRE2, RRE5, RRE6, RRE7), geteilt durch besagte Anzahl besagten ersten und besagten mindestens zweiten Referenzsignals (P1, P2, P3, P4), welches besagtes Datensignal (DS2, DS5, DS6) überlagert;

13. Zweiter Netzwerkknoten, eine Empfängervorrichtung (RA) nach Anspruch 12 umfassend.

14. Zweiter Netzwerkknoten nach Anspruch 13, wobei besagter zweiter Netzwerkknoten eine drahtlose Basisstation, ein drahtloser Zugangspunkt, eine entfernte Funkkopfstation oder eine Mobilstation (MS) ist.

**Revendications**

1. Procédé (MET_TA) de composition d'un signal d'émission, ledit procédé (MET) comprenant l'étape (M1/1) de composition dudit signal d'émission **caractérisée en ce qu'**elle :

- comprend dans une première fraction d'une plage de fréquences d'un premier élément de ressource radio (RRE2, RRE5, RRE7) une première fraction d'un premier signal de référence (P1) superposé à un signal de données (DS2, DS5, DS6), dans une première fraction d'une plage de fréquences d'au moins un deuxième élément de ressource radio (RRE6) au moins une deuxième fraction dudit premier signal de référence (P1), dans au moins une deuxième fraction de ladite plage de fréquences dudit premier élément de ressource radio (RRE2, RRE5, RRE7) une première fraction d'au moins un deuxième signal de référence (P2, P3, P4) superposé audit signal de données (DS2, DS5, DS6) et dans au moins une deuxième fraction de ladite plage de fréquences dudit ou desdits deuxièmes signaux de référence (RRE6) au moins une deuxième fraction dudit ou desdits deuxièmes signaux de référence (P2, P3, P4), dans laquelle ladite première et ladite ou lesdites deuxièmes fractions dudit premier élément de ressource radio et dudit ou desdits deuxièmes éléments de ressource radio ne se chevauchent pas et sont tangents, et dans laquelle une largeur de bande de fréquences de ladite première et de ladite ou desdites deuxièmes fractions dudit premier et dudit ou desdits deuxièmes signaux de référence (P1, P2, P3, P3) est égale à ou plus petite qu'une bande de fréquences dudit premier et dudit ou desdits deuxièmes éléments de ressource radio (RRE2, RRE5, RRE6, RRE7) divisée par ledit nombre dudit premier et dudit ou desdits deuxièmes signaux de référence (P1, P2, P3, P4) superposés audit signal de données (DS2, DS5, DS6) ;

ou **en ce qu'**elle

- comprend dans une première fraction d'une plage temporelle d'un premier élément de ressource radio (RRE2, RRE5, RRE7) une première fraction d'un premier signal de référence (P1) superposé à un signal de données (DS2, DS5, DS6), dans une première fraction d'une plage temporelle d'au moins un deuxième élément de ressource radio (RRE6) au moins une deuxième fraction dudit premier signal de référence (P1), dans au moins une deuxième fraction de ladite plage temporelle dudit premier élément de ressource radio (RRE2, RRE5, RRE7) une première fraction d'au moins un deuxième signal de référence (P2, P3, P4) superposé audit signal de données (DS2, DS5, DS6) et dans au moins une deuxième fraction de ladite plage temporelle dudit ou desdits deuxièmes signaux de référence (RRE6) au moins une deuxième fraction dudit ou desdits deuxièmes signaux de référence (P2, P3, P4), dans laquelle ladite première et ladite ou lesdites deuxièmes fractions dudit premier élément de ressource radio et dudit ou desdits deuxièmes éléments de ressource radio ne se chevauchent pas et sont tangents, et dans laquelle une plage temporelle de ladite première et de ladite ou desdites deuxièmes fractions dudit premier et dudit ou desdits deuxièmes signaux de référence (P1, P2, P3, P3) est égale à ou plus petite qu'une plage temporelle dudit premier et dudit ou desdits deuxièmes éléments de ressource radio (RR2, RRE5, RRE6, RRE7) divisée par ledit nombre dudit premier et dudit ou desdits deuxièmes signaux de référence (P1, P2, P3, P4) superposés audit signal de données (DS2, DS5, DS6).

2. Procédé (MET_TA) selon la revendication 1, dans lequel ledit ou lesdits deuxièmes éléments de ressource radio (RRE6) sont exclusivement réservés pour ladite ou lesdites deuxièmes fractions dudit premier signal de référence (P1) et dudit ou desdits deuxièmes signaux de référence (P2, P3, P4).

3. Procédé (MET_TA) selon la revendication 2, dans lequel les symboles de modulation de porteuse de données sont alloués symétriquement autour dudit ou desdits deuxièmes éléments de ressource radio (RRE6) exclusivement réservés en fonction d'un critère prédéfini.

4. Procédé (MET_TA) selon l'une quelconque des revendications précédentes, dans lequel ledit premier signal de référence (P1) et ledit ou lesdits deuxièmes signaux de référence (P2, P3, P4) sont émis avec une puissance de sortie supérieure aux symboles de modulation de porteuse.

5. Procédé (MET_TA) selon l'une quelconque des revendications précédentes, dans lequel le nombre dudit premier et dudit ou desdits deuxièmes signaux de référence (P1, P2, P3, P4) superposés audit signal de données (DS2, DS5, DS6) est égal au nombre d'éléments d'antenne (AE-1, AE-2) d'un système d'antenne (BS-AS) émettant ledit signal de données (DS2, DS5, DS6), ledit premier signal de référence (P1) et ledit ou lesdits deuxièmes signaux de référence (P2, P3, P4).

6. Procédé (MET_TA) selon l'une quelconque des revendications précédentes, dans lequel ledit procédé comprend en outre l'étape d'émission dudit premier signal de référence (P1) à partir d'un premier élément d'antenne (AE-1) et dudit ou desdits deuxièmes signaux de référence (P2, P3, P4) à partir d'un deuxième élément d'antenne (AE-2) ou d'émission dudit premier signal de référence (P1) et dudit ou desdits deuxièmes signaux de référence (P2, P3, P4) pondérés par des coefficients de précodage à partir dudit premier élément d'antenne (AE-1) et dudit ou desdits deuxièmes éléments d'antenne (AE-2).

7. Procédé (MET-RA) d'estimation de canal, ledit procédé (MET-RA) comprenant l'étape d'estimation (M1/6) d'un canal de transmission (TC) d'un signal de réception **caractérisée en ce qu'**elle :

   - comprend dans une première fraction d'une plage de fréquences d'un premier élément de ressource radio (RRE2, RRE5, RRE7) une première fraction d'un premier signal de référence (P1) superposé à un signal de données (DS2, DS5, DS6), dans une première fraction d'une plage de fréquences d'au moins un deuxième élément de ressource radio (RRE6) au moins une deuxième fraction dudit premier signal de référence (P1), dans au moins une deuxième fraction de ladite plage de fréquences dudit premier élément de ressource radio (RRE2, RRE5, RRE7) une première fraction d'au moins un deuxième signal de référence (P2, P3, P4) superposé audit signal de données (DS2, DS5, DS6) et dans au moins une deuxième fraction de ladite plage de fréquences dudit ou desdits deuxièmes signaux de référence (RRE6) au moins une deuxième fraction dudit ou desdits deuxièmes signaux de référence (P2, P3, P4), dans laquelle ladite première et ladite ou lesdites deuxièmes fractions dudit premier élément de ressource radio et dudit ou desdits deuxièmes éléments de ressource radio ne se chevauchent pas et sont tangents, et dans laquelle une largeur de bande de fréquences de ladite première et de ladite ou desdites deuxièmes fractions dudit premier et dudit ou desdits deuxièmes signaux de référence (P1, P2, P3, P3) est égale à ou plus petite qu'une bande de fréquences dudit premier et dudit ou desdits deuxièmes éléments de ressource radio (RRE2, RRE5, RRE6, RRE7) divisée par ledit nombre dudit premier et dudit ou desdits deuxièmes signaux de référence (P1, P2, P3, P4) superposés audit signal de données (DS2, DS5, DS6) ;

   ou **en ce qu'**elle

   - comprend dans une première fraction d'une plage temporelle d'un premier élément de ressource radio (RRE2, RRE5, RRE7) une première fraction d'un premier signal de référence (P1) superposé à un signal de données (DS2, DS5, DS6), dans une première fraction d'une plage temporelle d'au moins un deuxième élément de ressource radio (RRE6) au moins une deuxième fraction dudit premier signal de référence (P1), dans au moins une deuxième fraction de ladite plage temporelle dudit premier élément de ressource radio (RRE2, RRE5, RRE7) une première fraction d'au moins un deuxième signal de référence (P2, P3, P4) superposé audit signal de données (DS2, DS5, DS6) et dans au moins une deuxième fraction de ladite plage temporelle dudit ou desdits deuxièmes signaux de référence (RRE6) au moins une deuxième fraction dudit ou desdits deuxièmes signaux de référence (P2, P3, P4), dans laquelle ladite première et ladite ou lesdites deuxièmes fractions dudit premier élément de ressource radio et dudit ou desdits deuxièmes éléments de ressource radio ne se chevauchent pas et sont tangents, et dans laquelle une plage temporelle de ladite première et de ladite ou desdites deuxièmes fractions dudit premier et dudit ou desdits deuxièmes signaux de référence (P1, P2, P3, P3) est égale à ou plus petite qu'une plage temporelle dudit premier et dudit ou desdits deuxièmes éléments de ressource radio (RRE2, RRE5, RRE6, RRE7) divisée par ledit nombre dudit premier et dudit ou desdits deuxièmes signaux de référence (P1, P2, P3, P4) superposés audit signal de données (DS2, DS5, DS6).

8. Programme informatique disposant d'un code de programme destiné à réaliser l'un des procédés selon l'une des revendications précédentes, lorsque le code de programme est exécuté sur un ordinateur ou un processeur.

9. Appareil émetteur (TA) destiné à allouer des signaux de données et des signaux de référence à des éléments de ressource radio d'un système de communication radio (RCS), ledit appareil émetteur (TA) comprenant des moyens (SD) pour composer un signal d'émission **caractérisé en ce qu'**ils :

- comprennent dans une première fraction d'une plage de fréquences d'un premier élément de ressource radio (RRE2, RRE5, RRE7) une première fraction d'un premier signal de référence (P1) superposé à un signal de données (DS2, DS5, DS6), dans une première fraction d'une plage de fréquences d'au moins un deuxième élément de ressource radio (RRE6) au moins une deuxième fraction dudit premier signal de référence (P1), dans au moins une deuxième fraction de ladite plage de fréquences dudit premier élément de ressource radio (RRE2, RRE5, RRE7) une première fraction d'au moins un deuxième signal de référence (P2, P3, P4) superposé audit signal de données (DS2, DS5, DS6) et dans au moins une deuxième fraction de ladite plage de fréquences dudit ou desdits deuxièmes signaux de référence (RRE6) au moins une deuxième fraction dudit ou desdits deuxièmes signaux de référence (P2, P3, P4), dans laquelle ladite première et ladite ou lesdites deuxièmes fractions dudit premier élément de ressource radio et dudit ou desdits deuxièmes éléments de ressource radio ne se chevauchent pas et sont tangents, et dans laquelle une largeur de bande de fréquences de ladite première et de ladite ou desdites deuxièmes fractions dudit premier et dudit ou desdits deuxièmes signaux de référence (P1, P2, P3, P3) est égale à ou plus petite qu'une bande de fréquences dudit premier et dudit ou desdits deuxièmes éléments de ressource radio (RRE2, RRE5, RRE6, RRE7) divisée par ledit nombre dudit premier et dudit ou desdits deuxièmes signaux de référence (P1, P2, P3, P4) superposés audit signal de données (DS2, DS5, DS6) ;

ou **en ce qu'**ils

- comprennent dans une première fraction d'une plage temporelle d'un premier élément de ressource radio (RRE2, RRE5, RRE7) une première fraction d'un premier signal de référence (P1) superposé à un signal de données (DS2, DS5, DS6), dans une première fraction d'une plage temporelle d'au moins un deuxième élément de ressource radio (RRE6) au moins une deuxième fraction dudit premier signal de référence (P1), dans au moins une deuxième fraction de ladite plage temporelle dudit premier élément de ressource radio (RRE2, RRE5, RRE7) une première fraction d'au moins un deuxième signal de référence (P2, P3, P4) superposé audit signal de données (DS2, DS5, DS6) et dans au moins une deuxième fraction de ladite plage temporelle dudit ou desdits deuxièmes signaux de référence (RRE6) au moins une deuxième fraction dudit ou desdits deuxièmes signaux de référence (P2, P3, P4), dans laquelle ladite première et ladite ou lesdites deuxièmes fractions dudit premier élément de ressource radio et dudit ou desdits deuxièmes éléments de ressource radio ne se chevauchent pas et sont tangents, et dans laquelle une plage temporelle de ladite première et de ladite ou desdites deuxièmes fractions dudit premier et dudit ou desdits deuxièmes signaux de référence (P1, P2, P3, P3) est égale à ou plus petite qu'une plage temporelle dudit premier et dudit ou desdits deuxièmes éléments de ressource radio (RRE2, RRE5, RRE6, RRE7) divisée par ledit nombre dudit premier et dudit ou desdits deuxièmes signaux de référence (P1, P2, P3, P4) superposés audit signal de données (DS2, DS5, DS6).

10. Premier noeud de réseau comprenant un appareil émetteur (TA) selon la revendication 9.

11. Premier noeud de réseau selon la revendication 10, dans lequel ledit premier noeud de réseau est une station de base sans fil (BS), un point d'accès sans fil, une tête radio distante ou une station mobile.

**12.** Appareil récepteur (RA) destiné à une estimation de canal dans un système de communication radio (RCS), ledit appareil récepteur (RA) comprenant des moyens (CEU) pour estimer un canal de transmission (TC) d'un signal de réception **caractérisé en ce qu'**ils :

- comprennent dans une première fraction d'une plage de fréquences d'un premier élément de ressource radio (RRE2, RRE5, RRE7) une première fraction d'un premier signal de référence (P1) superposé à un signal de données (DS2, DS5, DS6), dans une première fraction d'une plage de fréquences d'au moins un deuxième élément de ressource radio (RRE6) au moins une deuxième fraction dudit premier signal de référence (P1), dans au moins une deuxième fraction de ladite plage de fréquences dudit premier élément de ressource radio (RRE2, RRE5, RRE7) une première fraction d'au moins un deuxième signal de référence (P2, P3, P4) superposé audit signal de données (DS2, DS5, DS6) et dans au moins une deuxième fraction de ladite plage de fréquences dudit ou desdits deuxièmes signaux de référence (RRE6) au moins une deuxième fraction dudit ou desdits deuxièmes signaux de référence (P2, P3, P4), dans laquelle ladite première et ladite ou lesdites deuxièmes fractions dudit premier élément de ressource radio et dudit ou desdits deuxièmes éléments de ressource radio ne se chevauchent pas et sont tangents, et dans laquelle une largeur de bande de fréquences de ladite première et de ladite ou desdites deuxièmes fractions dudit premier et dudit ou desdits deuxièmes signaux de référence (P1, P2, P3, P3) est égale à ou plus petite qu'une bande de fréquences dudit premier et dudit ou desdits deuxièmes éléments de ressource radio (RRE2, RRE5, RRE6, RRE7) divisée par ledit nombre dudit premier et dudit ou desdits deuxièmes signaux de référence (P1, P2, P3, P4) superposés audit signal de données (DS2, DS5, DS6) ;

ou **en ce qu'**ils

- comprennent dans une première fraction d'une plage temporelle d'un premier élément de ressource radio (RRE2, RRE5, RRE7) une première fraction d'un premier signal de référence (P1) superposé à un signal de données (DS2, DS5, DS6), dans une première fraction d'une plage temporelle d'au moins un deuxième élément de ressource radio (RRE6) au moins une deuxième fraction dudit premier signal de référence (P1), dans au moins une deuxième fraction de ladite plage temporelle dudit premier élément de ressource radio (RRE2, RRE5, RRE7) une première fraction d'au moins un deuxième signal de référence (P2, P3, P4) superposé audit signal de données (DS2, DS5, DS6) et dans au moins une deuxième fraction de ladite plage temporelle dudit ou desdits deuxièmes signaux de référence (RRE6) au moins une deuxième fraction dudit ou desdits deuxièmes signaux de référence (P2, P3, P4), dans laquelle ladite première et ladite ou lesdites deuxièmes fractions dudit premier élément de ressource radio et dudit ou desdits deuxièmes éléments de ressource radio ne se chevauchent pas et sont tangents, et dans laquelle une plage temporelle de ladite première et de ladite ou desdites deuxièmes fractions dudit premier et dudit ou desdits deuxièmes signaux de référence (P1, P2, P3, P3) est égale à ou plus petite qu'une plage temporelle dudit premier et dudit ou desdits deuxièmes éléments de ressource radio (RR2, RRE5, RRE6, RRE7) divisée par ledit nombre dudit premier et dudit ou desdits deuxièmes signaux de référence (P1, P2, P3, P4) superposés audit signal de données (DS2, DS5, DS6).

**13.** Deuxième noeud de réseau comprenant un appareil récepteur (RA) selon la revendication 12.

**14.** Deuxième noeud de réseau selon la revendication 13, dans lequel ledit deuxième noeud de réseau est une station de base sans fil, un point d'accès mobile, une tête radio distante ou une station mobile (MS).

## Prior art

**FIG. 1**

EP 2 713 542 B1

*Prior art*

For AP0

For AP1

FIG. 2

a)

b)

FIG. 3

EP 2 713 542 B1

FIG. 4

*a)*　*FIG. 5*　*b)*

EP 2 713 542 B1

a)

b)

For AP0:

c)

For AP1:

d)

FIG. 6

*FIG. 7*

FIG. 8

FIG. 9

FIG. 10

EP 2 713 542 B1

*FIG. 11*

EP 2 713 542 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120183103 A1

- US 20100103949 A1

### Non-patent literature cited in the description

- **F. SCHAICH.** European Wireless Conference. *Filterbank Based Multi Carrier Transmission (FBMC) - evolving OFDM,* 2010, 1051-1058

- **S. KAY.** Fundamentals of statistical signal processing: Estimation Theory. Prentice Hall, 1991